# EUROPEAN PATENT APPLICATION

(11) **EP 2 309 144 A1**
(43) Date of publication of application: **13.04.2011**
(21) Application number: 09797904.1
(22) Date of filing: 14.07.2009
(51) Int. Cl.: F16C 33/54, F16C 23/08, F16C 33/48

(54) **PRESSED CAGE, SELF-ALIGNING ROLLER BEARING, AND METHOD OF MANUFACTURING PRESSED CAGE**

(30) Priority: 18.07.2008 JP 2008187319; 18.07.2008 JP 2008187343; 08.07.2009 JP 2009161741
(71) Applicant: NTN Corporation, Osaka-shi, Osaka 550-0003 (JP)
(72) Inventor: UMEMOTO Takehiko, Kuwana-shi Mie 511-0811 (JP); TSUMORI Yukihisa, Kuwana-shi Mie 511-0811 (JP); MAEDA Takeshi, Kuwana-shi Mie 511-0811 (JP); SHIMIZU Yasuhiro, Kuwana-shi Mie 511-0811 (JP)
(74) Representative: Grünecker, Kinkeldey, Stockmair & Schwanhäusser Anwaltssozietät
(86) International application number: PCT/JP2009/062715
(87) International publication number: WO 2010/007979

(57) **Abstract**

It is desired to form a flange and roller guide surfaces on each retainer of a self-aligning roller bearing easily and with high precision. Each punched retainer include a large-diameter annular portion (1), a small-diameter annular portion (2), a plurality of bridges (3) extending between the annular portions (1) and (2) and defining a plurality of circumferentially separated pockets (4) therebetween, roller guide surfaces (la) that can be brought into sliding contact with end surfaces of respective convex rollers (5), which revolve around the axis of the bearing, and a flange (6) formed by radially bending the large-diameter annular portion (1). The roller guide surfaces (la) comprise punched sections formed on the portions of the inner peripheries of the pockets (4) located at the large-diameter annular portion (1), and the flange (6) has a bent portion ® that extends the entire circumference of the large-diameter annular portion (1). With this arrangement, the roller guide surfaces (1a) can be formed by punching only, which is a essential step. This makes it possible to make uniform the flatness of the back and front surfaces of the flange and its bent angle over the entire circumference thereof.

## Description

### TECHNICAL FIELD

This invention relates to a punched retainer of which a flange and pockets are formed by pressing, a self-aligning roller bearing using such a punched retainer, and a method of manufacturing such a punched retainer.

### BACKGROUND ART

A self-aligning rolling bearing is a double-row roller bearing of which the outer race is formed with a spherical raceway, and of which the rolling elements of the respective rows are convex rollers. In order to reduce skew behavior of the convex rollers when the rollers revolve around the axis of the bearing, the rollers are guided by a guide ring, an intermediate flange or a retainer. For example, Patent document 1 discloses a punched retainer formed with a guide surface that can be brought into sliding contact with the end surfaces of the revolving convex rollers.

As shown in Figs. 21(a) and 21(b), each punched retainer disclosed in Patent document 1 comprises a large-diameter annular portion 101, a small-diameter annular portion 102, a plurality of bridges 103 extending between the large-diameter and small-diameter annular portions 101 and 102 and defining pockets 104 circumferentially spaced from each other by the bridges 103, and a flange 105 formed by radially bending the large-diameter annular portion 101.

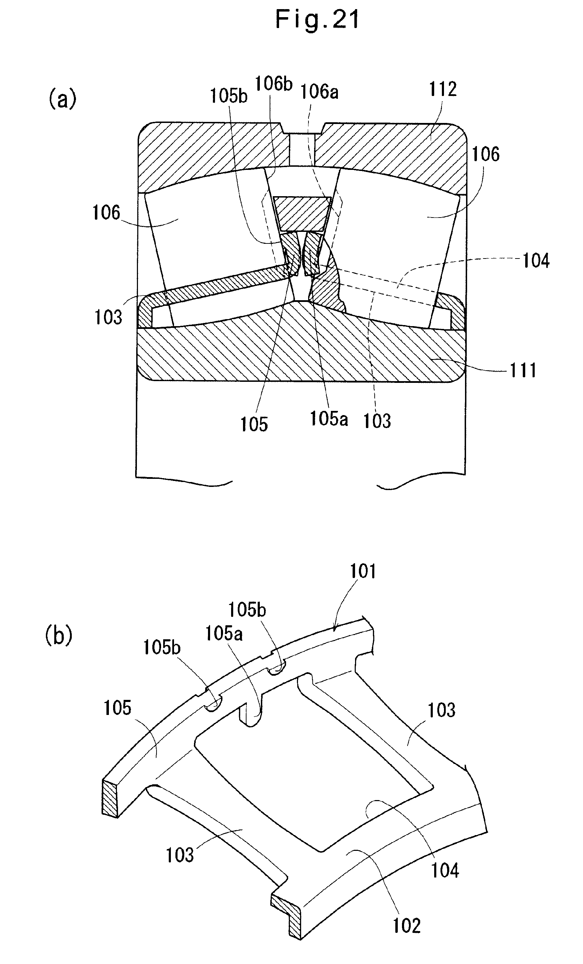

For ease of assembly of such a roller bearing, the rollers are retained by the respective retainers beforehand. The retainers have means for preventing separation of the rollers from the retainers. In the arrangement of Figs. 21(a) and 21(b), for ease of assembly of the bearing, the rollers of the respective rows are retained by the respective punched retainers. In particular, the bridges 103 on both circumferential sides of each pocket contact the outer peripheral portion of the convex roller 106 in the pocket from one of the radially inward and radially outward directions, thereby preventing separation of the convex roller 106 in the one of the radially inward and radially outward directions. For this purpose, the bridges 103 are displaced from the areas where the distances between the circumferentially adjacent convex rollers 106 are the narrowest, i.e. the pitch circle passing the rotation axes of the respective convex rollers 106 in the one of the radially inward and radially outward directions. This arrangement has an additional advantage that it is possible to increase the number of rollers and/or the diameter of the rollers. The flange 105 is bent in the other of the radially inward and radially outward directions. The flange 105 has anti-separation portions 105a each engaged in a recess 106a formed in the central portion of one of the end surfaces of the corresponding convex roller 106. When each convex roller 106 is fitted in a pocket 104 while pressing and elastically deforming the flange 105 and the anti-separation portions 105a, the anti-separation portions 105a is engaged in the recess 106a of the convex roller 106 due to elastic recovery, thus preventing separation of the convex roller 106 in the other of the radially inward and radially outward directions.

The flange 105 is formed with roller guide surfaces 105b that can be brought into sliding contact with a ground surface 106a connecting the recess 106a and the chamfer of each convex roller 106. The roller guide surfaces 105b face the ground surfaces 106b of the respective convex rollers 106, which revolve between the inner and outer races 111 and 112. By forming the roller guide surfaces 105b, the end surfaces of the convex rollers 106 in either row is prevented from being separated from the roller guide surfaces 105b, irrespective of the state of axial loads applied to the self-aligning roller bearing. This stably prevents skew behavior of the rollers.

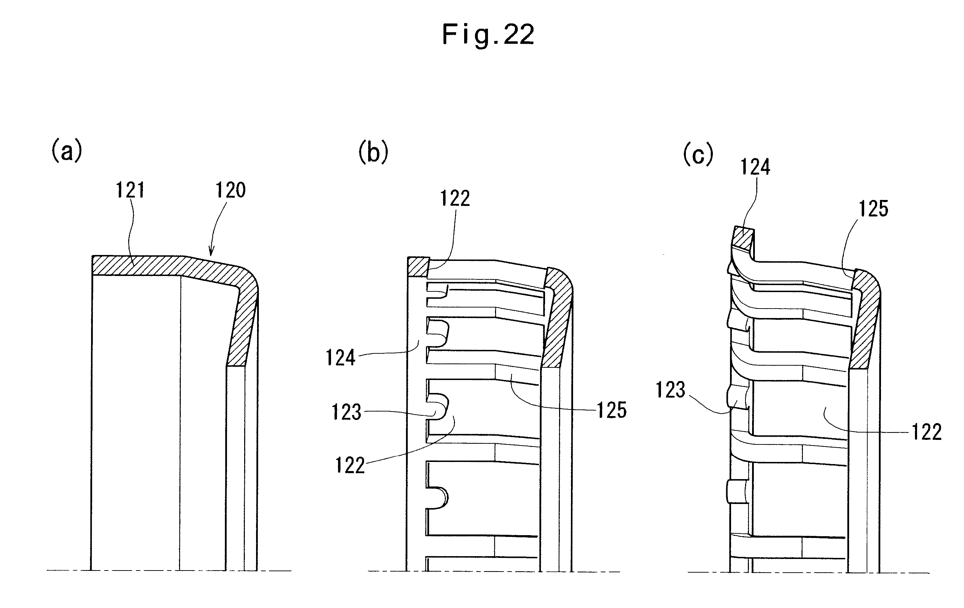

In a conventional method of manufacturing a punched retainer, as shown in Fig. 22(a), an annular member 120 including a peripheral wall 121 having large-diameter and small-diameter ends is formed from a metal sheet, and as shown in Fig. 22(b), holes 122 for pockets are punched between the large-diameter and small-diameter ends of the peripheral wall 121. Then as shown in Fig. 22(c), a flange is formed by radially bending the entire circumference of the large-diameter end 124 of the annular member 120. The flange is bent at intermediate portions of connecting portions 125 as bridges. At the small-diameter 124 of the annular member 124, anti-separation portions and roller guide surfaces are formed.

If e.g. the anti-separation portions shown in Figs. 21(a) and 21(b) are formed, bent pieces 123 are formed by punching on the inner periphery of the holes 122 for pockets as shown in Fig. 22(b). After forming the flange, the bent pieces are bent to face toward the front (i.e. toward the pockets).

Patent document 2 discloses another arrangement in which the flange protrudes toward the front to form anti-separation portions that engage in recesses formed in end surfaces of the convex rollers.

Patent document 1: JP Patent Publication 2000-2247A
Patent document 2: JP Patent Publication 2-180314A

### DISCLOSURE OF THE INVENTION

### OBJEC OF THE INVENTION

With the punched retainer shown in Figs. 21(a) and 21(b), the flange is bent at intermediate portions of the bridges 103. In particular, in manufacturing the punched retainer, the connecting portions formed between the ends of the peripheral wall during punching are formed into the bridges. Thus, the flange is formed at the end of the peripheral wall by bending at intermediate portions of the connecting portions. Since it is difficult to apply uniform internal stress or uniform bending force to the respective connecting portions, the flange tends to be bent at the respective connecting portions to different degrees. Since the flange 105, which is formed at the end of the peripheral wall, is bent to different degrees at the respective connecting portions, it is difficult to form the flange such that its both surfaces have uniform flatness or its bent angle is uniform over the entire circumference. This in turn makes it difficult to form a structural portion that requires high precision over the entire circumference or in the circumferential direction using the flange. In the example of Figs. 21(a) and 21(b), in order to form the roller guide surfaces 105b, which requires high precision, on the flange 105, after forming the flange, the roller guide surfaces 105b are formed by extrusion molding on the end of the peripheral wall to ensure high precision.

### MEANS TO ACHIEVE THE OBJECT

An object of the present invention is to form a flange and roller guide surfaces on each punched retainer of a self-aligning roller bearing easily and with high precision.

### MEANS TO ACHIEVE THE OBJECT

In order to achieve this object, the present invention provides a punched retainer comprising a large-diameter annular portion, a small-diameter annular portion, and a plurality of bridges extending between the large-diameter annular portion and the small-diameter annular portion and defining a plurality of circumferentially separated pockets between the adjacent bridges, said retainer having roller guide surfaces which can be brought into sliding contact with end surfaces of revolving convex rollers, and a flange formed by bending the large-diameter annular portion in a radial direction, **characterized in that** said roller guide surfaces comprise punched sections formed on the portions of the inner peripheries of the pockets located at the large-diameter annular portion, and the flange has a bent portion that extends the entire circumference of the large-diameter annular portion.

With this arrangement, the punched section of each pocket formed by punching comprises a shear surface and a broken surface. Since the shear surface is a section formed by a punch, it is high in precision. By arranging the punched section of the large-diameter annular portion which extends the entire circumference so as to form a portion of the inner periphery of each pocket, it is possible to use the punched section of the large-diameter annular portion as roller guide surfaces that face end surfaces of the respective convex rollers. Since the punched section is high in precision, the roller guide surfaces, which comprise the punched section of the large-diameter annular portion, are of 0sufficient precision. Thus, the pockets can be formed by punching only.
Also, since the inner periphery of each pocket includes the punched section of the large-diameter annular portion, it is possible to form the bent portion of the flange at the large-diameter annular portion over the entire circumference. This makes it possible to make uniform the flatness of the back and front surfaces of the flange and its bent angle over the entire circumference.

According to the present invention, since the roller guide surfaces can be formed by punching only, which is an essential step, and by punching, it is possible to make uniform the flatness of the back and front surfaces of the flange and its bent angle over the entire circumference. Thus, it is possible to provide each punched retainer of a self-aligning roller bearing with a flange and roller guide surfaces easily and with high precision.

### BRIEF DESCRIPTION OF THE DRAWINGS

Fig. 1 is a partial sectional view of a self-aligning roller bearing according to a first embodiment.
Fig. 2(a) is a sectional view of a pocket taken along an axial plane including a rotation axis of a roller; Fig. 2(b) is a plan view of the pocket of Fig. 2(a) as seen from the direction of arrow B of Fig. 2(a); Fig. 2(c) is a sectional view taken along line C-C of Fig. 2(a); and Fig. 2(d) is a sectional view taken along line D-D of Fig. 2(a).
Fig. 3 is a partial enlarged perspective view of a flange of Fig. 1 as seen from the front side thereof.
Fig. 4(a) shows a roller before being inserted in a pocket of Fig. 2; Fig. 4(b) shows how the roller is pushed into the pocket from the state of Fig. 4(a); and Fig. 4(c) shows how the retainer elastically recovers from the state of Fig. 4(b).
Fig. 5 is a back view of a punched retainer of Fig. 1.
Fig. 6(a) shows the step of forming a cup member in manufacturing a punched retainer of Fig. 1; Fig. 6(b) shows the step of punching the bottom of the cup member; Fig. 6(c) shows the step of forming a flange by bending; Fig. 6(d) shows the punching step; and Fig. 6(e) shows the extrusion molding step.
Fig. 7(a) is a partial enlarged plan view of a hole formed by the punching step of Fig. 6, as seen from a radial direction; and Fig. 7(b) is a sectional view of the hole of Fig. 7(a) taken along an axial plane.
Fig. 8 shows how an assembly of Fig. 1 is mounted in position by turning.
Fig. 9(a) is a partial enlarged sectional view of a pocket of a second embodiment taken along a radial plane; and Fig. 9(b) is a partial enlarged sectional view of a pocket of the second embodiment taken along an axial plane.
Fig. 10(a) is a partial sectional view of the pocket of Fig. 9 taken along an axial plane, showing how a convex roller is inserted into the pocket of Fig. 9; and Fig. 10(b) shows the state of Fig. 10(a) as taken along a radial plane.
Fig. 11 is a vertical sectional view of a self-aligning roller bearing including conventional punched retainers.
Fig. 12(a) is a partial enlarged sectional view of a pocket of a punched retainer of Fig. 11, taken along a radial plane; and Fig. 12(b) is a similar view taken along an axial plane.
Fig. 13(a) is a partial enlarged perspective view of a punched retainer of Fig. 11 as viewed from obliquely outwardly; Fig. 13(b) is partial enlarged perspective view of the punched retainer of Fig. 11 as from inside; and Fig. 13(c) is a bottom view of Fig. 13(b) as viewed from below.
Fig. 14(a) is a sectional view of a pocket of the punched retainer of Fig. 11 taken along an axial plane, showing how a roller is inserted into the pocket; Fig. 14(b) shows the state of Fig. 14(a) as taken along a radial plane containing line b-b of Fig. 14(a).
Fig. 15 is a partial sectional view of a self-aligning roller bearing according to a third embodiment.
Fig. 16(a) is a sectional view of a pocket of Fig. 15 taken along an axial plane containing a rotation axis of a roller; Fig. (16(b) is a plan view of the pocket of Fig. 16(a) as viewed from the direction of arrow B of Fig. 16(a); Fig. 16(c) is a sectional view taken along line C-C of Fig. 16(a); and Fig. 16(d) is a sectional view taken along line D-D of Fig. 16(a).
Fig. 17(a) is a partial enlarged perspective view of a flange of Fig. 15 as seen from the front side thereof; and Fig. 17(b) is a partial enlarged perspective view of a flange of Fig. 15 as seen from the back side thereof.
Fig. 18(a) shows a roller before being inserted in a pocket of Fig. 16; Fig. 18b) shows how the roller is pushed into the pocket from the state of Fig. 18(a); and Fig. 18(c) shows how the retainer elastically recovers from the state of Fig. 18(b).
Fig. 19 is a back view of a punched retainer of Fig. 15.

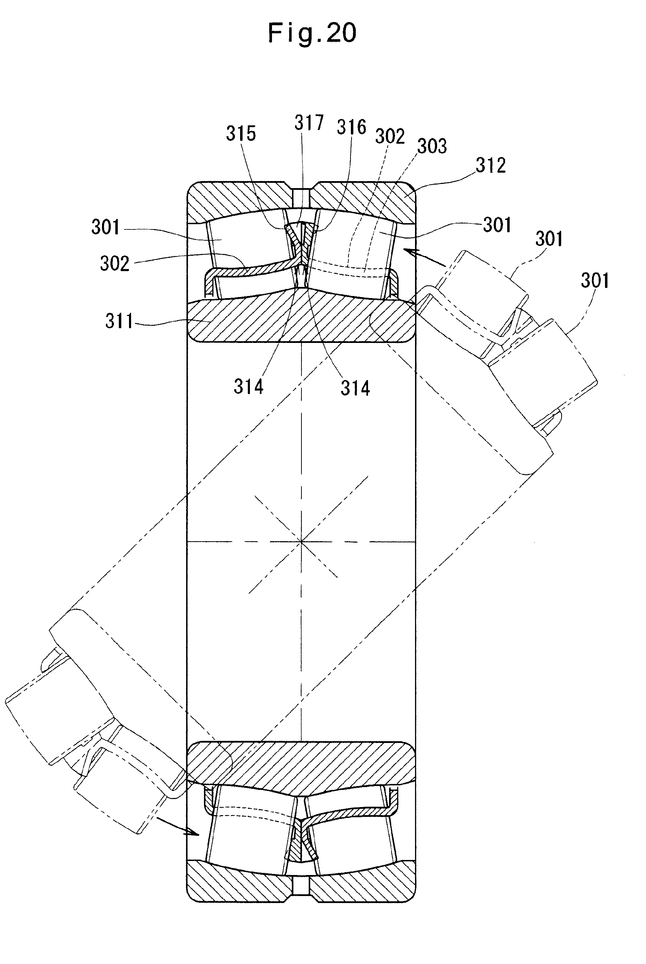

Fig. 20 shows how an assembly of Fig. 15 is mounted in position by turning.
Fig. 21(a) is a partial enlarged vertical sectional view of a conventional punched retainer; and Fig. 21(b) is a partial enlarged perspective view of a pocket of the punched retainer of Fig. 21(a) as seen from obliquely outwardly.
Fig. 22(a) shows the step of forming an annular member in manufacturing a conventional punched retainer; Fig. 22(b) shows a punching step; and Fig. 22(c) shows the step of forming a flange by bending.
Fig. 23 is a sectional view of a tapered roller bearing having a punched retainer according to Reference Example 1.
Fig. 24 is a partial plan view of the punched retainer according to Reference Example 1 as seen from the direction of arrow B of Fig. 2(a).
Fig. 25 is a partial side view of the punched retainer according to Reference Example 1 as seen from one end thereof.
Fig. 26 is a partial sectional view of a tapered roller bearing including a punched retainer according to Reference Example 2.
Fig. 27 is a partial sectional view of a tapered roller bearing including a punched retainer according to Reference Example 3.
Fig. 28 is a partial sectional view of a tapered roller bearing including a punched retainer according to Reference Example 4.
Fig. 29 is a partial plan view of the punched retainer according to Reference Example 4 as seen from the direction of arrow B of Fig. 2(a).
Fig. 30 is a partial sectional view of a tapered roller bearing including a punched retainer according to Reference Example 5.
Fig. 31 is a partial side view of the punched retainer according to Reference Example 5 as seen from one end thereof.
Fig. 32 is a partial sectional view of a tapered roller bearing including a punched retainer according to Reference Example 6.

### BEST MODE FOR EMBODYING THE INVENTION

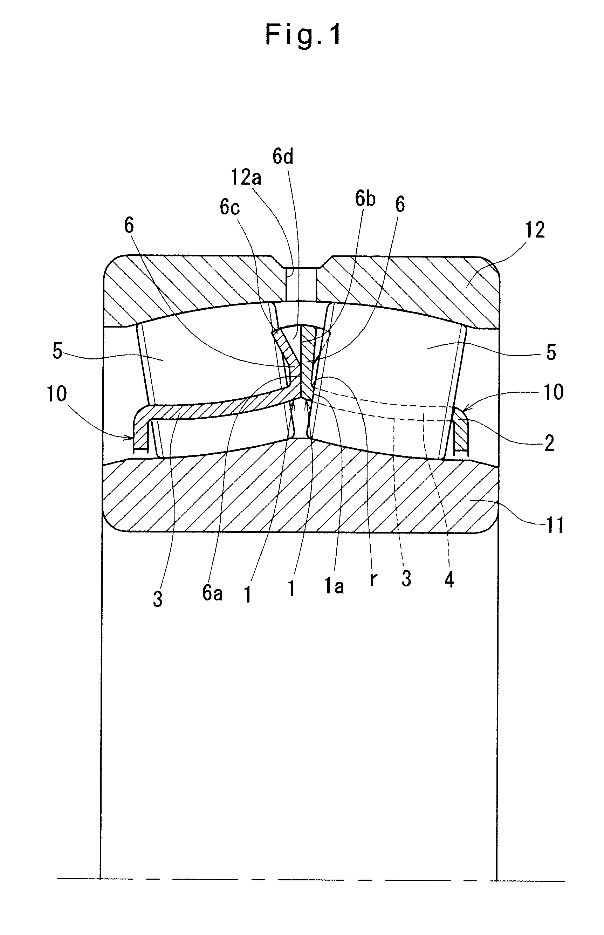

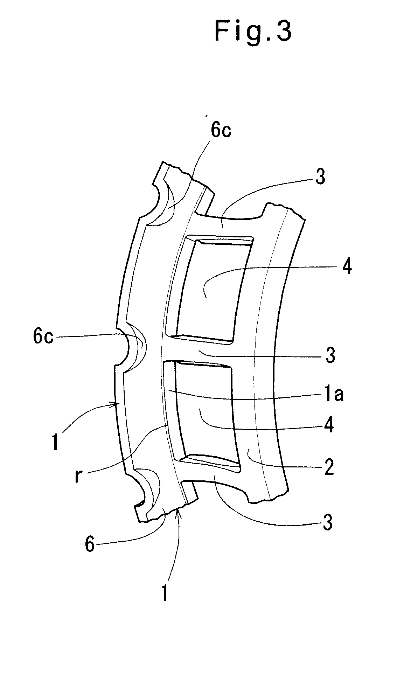

Now the first embodiment of the present invention is described. As shown in Figs. 1 to 3, the self-aligning roller bearing according to the first embodiment includes an opposed pair of punched retainers 10 mounted between inner and outer races 11 and 12. The punched retainers 10 each include a large-diameter annular portion 1, a small-diameter annular portion 2, a plurality of bridges 3 extending between the annular portions 1 and 2 and defining a plurality of circumferentially separated pockets 4 therebetween, roller guide surfaces 1a that can be brought into sliding contact with end surfaces of respective convex rollers 5, which revolve around the axis of the bearing, and a flange 6 formed by radially bending the large-diameter annular portion 1.

The large-diameter annular portion 1 and the small-diameter annular portion 2 are portions of each punched retainer 10 having a predetermined axial width and extending the entire circumference of the retainer.

The flange 6 has a bent portion r extending the entire circumference of the large-diameter annular portion 1.

The inner wall of each pocket 4 comprises a punched section on the large-diameter annular portion 1, a punched section on the small-diameter annular portion 2, and circumferential end portions of the respective bridges 3 defining the pocket 4. When the convex rollers 5 revolve around the axis of the bearing, the circumferential distances between the adjacent rollers and their axial positions are kept within predetermined ranges by the inner peripheries of the respective pockets 4.

The circumferential end portions of the bridges 3 are shaped so as to receive the rolling surfaces of the respective convex rollers 5. Thus, the punched retainers 10 are guided by the rolling elements. The circumferential end portions of the bridges located in front of the respective rollers with respect to the direction in which the rollers revolve around the axis of the bearing receive the rolling surfaces of the respective convex rollers 5. Thus, the punched retainers 10 are guided in the radial direction. Under normal operating conditions, the convex rollers 5 never ride onto the bridges 3 while rolling. With the convex rollers 5 disposed between the inner and outer races, the bridges 3 of each punched retainer 10 are located radially inwardly of the pitch circle PCD including the rotation axes c of the respective rollers 5 and having a pitch circle diameter. (This pitch circle is hereinafter simply referred to as "PCD".) With this arrangement, compared to the arrangement in which the bridges are located radially outwardly of the pitch circle, the radial component of the force applied to the punched retainer 10 from the rollers 5 through the contact portions between the rolling surfaces of the rollers 5 and the circumferential end portions of the bridges 3 is larger, so that the punched retainer 10 can be more easily guided in the radial direction. For other purposes, e.g. if strength of the bridges 3 is more important, the bridges 3 may be located radially outwardly so as to be located on a larger circle, thereby increasing the circumferential width of the bridges 3 without reducing the number of rollers. Each punched retainer 10 may be of the bearing race guided type using the distal edge of the flange 6 or the distal edge of a small flange formed by bending the small-diameter annular portion 2.

The roller guide surfaces 1a are punched sections formed on the large-diameter annular portion and forming the inner peripheries of the respective pockets 4. The roller guide surfaces 1a face the end surfaces of the convex rollers 5. If the convex rollers 5 are skewed while revolving around the axis of the bearing, the roller guide surfaces 1a restrict such skewing by coming into sliding contact with the respective rollers 5.

In particular, the end surfaces of the convex rollers 5 are formed by grinding except their chamfered portions, while the roller guide surfaces 1a have a circumferential length that is long enough such that the roller guide surfaces 1a come into sliding contact with the respective ground surfaces over their entire diameter while the rollers 5 are revolving around the axis of the bearing.

Since each contact area is circumferentially symmetrical with respect to the rotation axis of the convex roller 5, the convex rollers 5 can roll stably. The longer the area where the rollers can be brought into sliding contact, the more effectively it is possible to prevent skewing.

In order to receive skew behavior of the rollers with the punched retainers 10, each punched retainer 10 is preferably provided with means for preventing skew rotation, thereby stabilizing the rotation of the retainer. When mounting the pair of identically shaped retainers 10 so as to oppose to each other, the flanges 6 of the respective punched retainers 10, which receive skew behavior, have their backs in contact with each other to prevent skew rotation. Since the flanges 6 contact each other while the retainers are rotating, the backs of the flanges 6 are in sliding contact with each other.

Thus, the back of each flange 6 has flat surface portions 6a and 6b that extend over the entire circumference so as to be brought into sliding contact with the back of the flange 6 of the other identically shaped punched retainer.

When the backs of the flanges 6 are brought into sliding contact with each other in order to prevent skew rotation of the retainers while guiding the rollers, for stable behavior of the retainers and rollers, it is effective to increase the areas of the flat surface portions 6a and 6b by increasing the widths of the flat surface portions 6a and 6b over the entire circumference thereof, and to increase the flatness of the flat surface portions 6a and 6b.

As described above, according to the present invention, the flatness of the backs of the flanges 6 can be easily made uniform over the entire circumference thereof. Thus, the flat surface portion 6a can be easily formed when forming the flange so as to extend the entire circumference. The flat surface portion 6a can be formed easily by separate pressing too. The flat surface portions 6b, which are circumferentially equidistantly spaced apart from each other, can also be easily formed with uniform precision.

The flat surface portion 6a extends along a radial plane in view of sliding contact properties during operation. But in view of the aligning angle, the flanges 6 may be inclined toward its distal end over the entire width or from its intermediate portion with respect to the width direction. For example, only the flat surface portions 6b may be inclined.

The bridges 3 are in contact with the respective convex rollers 5 from one of the radially inward and radially outward directions, thereby preventing separation of the rollers in the one of the radially inward and radially outward directions. The flanges 6, which extend in the other of the radially inward and radially outward directions, have anti-separation portions 6c provided at positions between the adjacent pockets 4 so as to overlap the outer peripheral portions of the convex rollers 5 from the other of the radially inward and radially outward directions with a gap g left therebetween. The outer peripheral portion of each convex roller 5 comprises a rolling surface and chamfers.

With the convex rollers 5 disposed between the inner and outer races 11 and 12, the bridges 3 are displaced from the PCD in the one of the radially inward and radially outward directions. The bridges 3 on both circumferential sides of each pocket 4 contact the convex roller 5 in the pocket 4 from the one of the radially inward and radially outward directions, thereby preventing separation of the roller 5 in the one of the radially inward and radially outward directions. With this arrangement, since the bridges 3, which are located in the space between the inner and outer races 11 and 12, are located closer to the one of the inner and outer races corresponding to the one of the radially inward and outward directions, it is possible to ensure a large width of the flange 6 and thus a large width of the flat surface portion 6a.

By forming the anti-separation portions 6c so as to overlap the outer peripheral portions of the convex rollers 5 from the other of the radially inward and radially outward directions with a gap g left therebetween, it is possible to prevent separation of the rollers from the punched retainer without depending upon a recess on one of the end surfaces of each convex roller 5. This eliminates the need to form such a recess, which in turn reduces the cost of the convex rollers 5 and increases the area of the end surface of each convex roller 5 that can be brought into sliding contact with the roller guide surfaces 1a. The gaps g prevent the anti-separation portions 6c from contacting the outer peripheral portions of the convex rollers 5 during operation.

Since the two anti-separation portions 6c corresponding to each adjacent pair of bridges 3, respectively, are provided at positions displaced from the PCD in the other of the radially inward and radially outward directions so as to overlap the outer peripheral portion of the corresponding convex roller 5 from the other of the radially inward and radially outward directions, the anti-separation portions 6c are located in the spaces between the adjacent convex rollers 5. Thus, the anti-separation portions 6c do not influence e.g. the number of rollers.

Instead of forming means for preventing separation of the convex rollers 5 in the other of the radially inward and radially outward directions on the flange 6, such means may be formed e.g. on the large-diameter annular portion 1 or the small-diameter annular portion 2, which define inner peripheries of the pockets 4, so as to be engageable in recesses formed in end surfaces of the convex rollers 5. If no deep recesses can be formed in the end surfaces of the convex rollers 5 in order to meet rigidity requirements for the convex rollers 5, the anti-separation portions have to be reduced in size so as to be received in the shallow recesses. Since misalignment tends to occur in self-aligning roller bearings, the anti-separation portions tend to contact the rollers. Thus, if the anti-separation portions are small in size, they tend to quickly become worn to such an extent as to lose its anti-separation function. In contrast, the anti-separation portions 6c provided so as to overlap the outer peripheral portions of the convex rollers 5 from the other of the radially inward and radially outward directions with the gap g therebetween, their size is not restricted by the depth of the recesses, so that larger anti-separation portions 6c can be formed.

The anti-separation portions 6c comprise bulges formed on the portions of the flange 6 located between the adjacent pockets 4 by extrusion molding so as to protrude toward the front. When each convex roller 5 is pushed into the corresponding pocket 4 while elastically deforming the flange 6, the anti-separation portions 6c on both circumferential sides of the convex roller 5 overlap the outer peripheral portion of the convex roller 5 from the other of the radially inward and radially outward directions with the gap g due to elastic recovery.

Since the anti-separation portions 6c are formed by bulging the flange 6, the anti-separation portions 6c have no free ends separated from the flange 6. This increases the sectional area of the continuous portions between the anti-separation portions 6c and the flange 6 compared to the anti-separation portions formed by bending. The anti-separation portions 6c can thus be more easily bent relative to the flange 6 than the anti-separation portions formed by bending. Thus even if a convex roller 5 rides onto a bridge 3 (which may happen in an abnormal situation), and its outer peripheral portion contacts the corresponding anti-separation portion 6c, the anti-separation portion 6c is less likely to be damaged. This is advantageous in stabilizing the behavior of the convex rollers 5 such as riding onto the pillars 3 in normal positions by contacting the anti-separation portions 6c, and in easily protecting the anti-separation portions 6c during handling of the punched retainer 10.

Since the anti-separation portions 6c are formed by extrusion molding using a die, the anti-separation portions 6c can be formed with high accuracy.

Since the anti-separation portions 6c are formed by extrusion molding of the flange 6, the anti-separation portions have no punched sections. Thus, in the above-mentioned abnormal situation, the outer peripheral portion of the convex roller 5 comes into surface contact with the surface of the bulge. This prevents oil film on the outer peripheral portion of the convex roller 5 from being scraped off, or the outer peripheral portion of the convex roller 5 from being damaged by the rough punched sections, thus minimizing the possibility of breakage of the outer peripheral portion of the convex roller 5.

By using the elastic deformation of the punched retainer 10, it is not necessary to form anti-separation portions by plastic bending with each convex roller 5 supported on the inner periphery of the pocket 4.

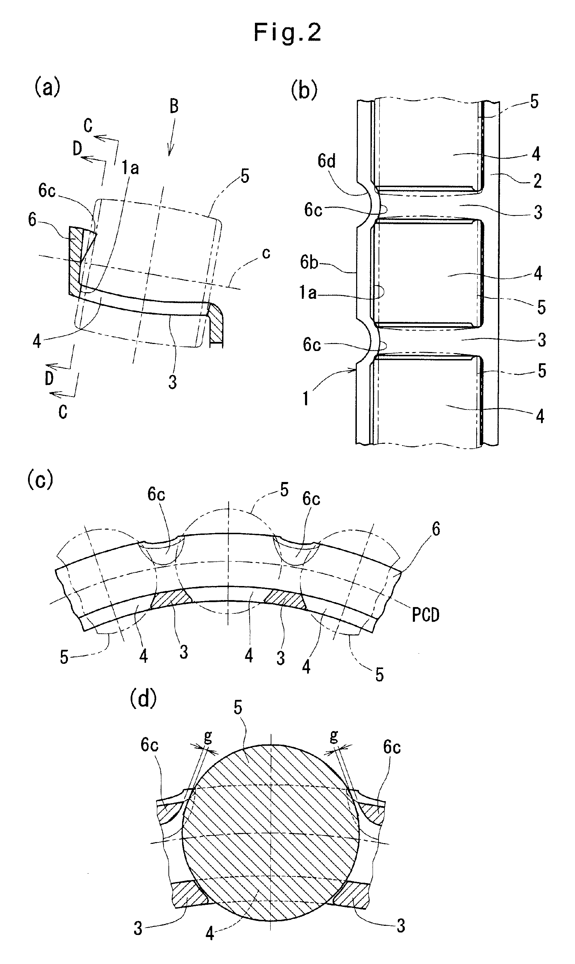

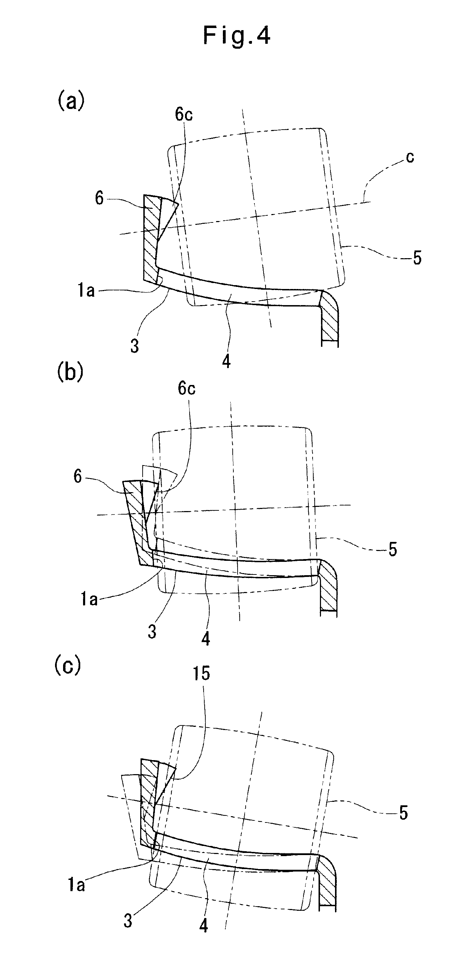

In the example of the punched retainer 10, as shown in Fig. 4(a), by pressing the outer peripheral portion of each convex roller 5 against the anti-separation portion 6c and the flange 6, the flange 6 and the bridges 3 are elastically deformed as shown in Fig. 4(b). Thus, the convex roller 5 can be pushed into the pocket 4. As shown in Fig. 4(c), when elastic recovery is produced, as shown in Fig. 2(d), the anti-separation portions 6c corresponding to the respective bridges 3 on both sides of the roller overlap the outer peripheral portion of the convex roller 5 from the other of the radially outward and radially inward directions with the gap g left therebetween.

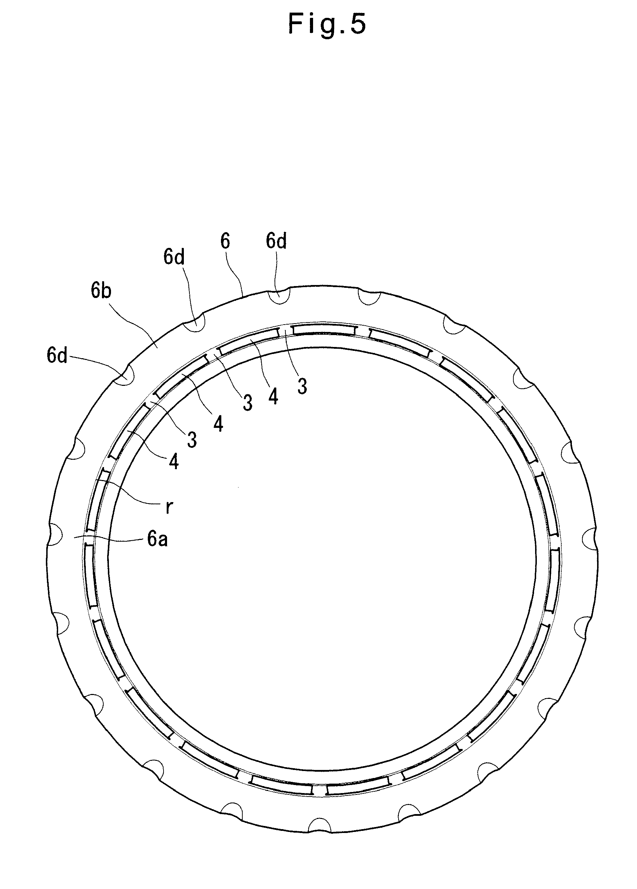

As shown in Fig. 5, the flange 6 has a distal edge extending along a circle around the central axis of the retainer.

As described above, since the anti-separation portions 6c are formed by extrusion molding of the flange 6, no cutout portions for defining the anti-separation portions form at one end of the peripheral wall where the large-diameter annular portion 1 is formed. Thus these portions can be used for various purposes. In this case, by forming distal edge of the flange 6 so as to extend along a circle, the flange 6 can be formed easily. Since the punched retainer 10 is formed by punching into a simple shape, the die for forming the retainer can be formed with high accuracy and its lifespan is long. Further, since there are no cut-out portions, less material is wasted.

Since the distal edge of the flange 6 extends along a circle, there are no cut-out portions between the circumferentially adjacent anti-separation portions 6c. This makes it possible to add flat portions 6b between recesses 6d formed when the anti-separation portions 6c are formed. This makes it possible to increase the area of the flange that can be brought into sliding contact with the rollers in the radial direction compared to the arrangement in which only the flat surface portion 6a is formed, which extends the entire circumference of the flange, on the side displaced from the anti-separation portions 6c in the one of the radially inward and radially outward directions.

The flat surface portions 6b can be expanded radially up to the point where their diameter is equal to that of the distal edge of the flange 6. The distal edge of the flange 6 can be located as close as possible to the bearing ring in the other of the radially inner and radially outer directions (12 in the embodiment), provided the flange can be inserted into or onto this bearing ring. The flat surface portions 6b, as well as the anti-separation portions 6c, are circumferentially equidistantly spaced from each other, so that the flat surface portions 6b do not alter the center of the gravity of the retainer.

As shown in Figs. 2(b) and 2(c), the anti-separation portions 6c are symmetrical with respect to any circumferentially adjacent convex rollers 5.

Since the anti-separation portions 6c are formed on the flange 6 at circumferential positions corresponding to the respective pockets 4, they are arranged symmetrical with respect to the convex rollers 5. This makes it possible to minimize the number of anti-separation portions 6c. Since the anti-separation portions 6c can be formed accurately using a die, in the embodiment, it is possible to provide the same degree of anti-separation effect to the respective convex rollers 5.

As shown in Figs. 2(a) to 2(d) and Figs. 4(a) and 4(b), each anti-separation portion 6c axially bulges most remarkably at the distal edge of the flange 6, and the degree of axial bulge decreases gradually in the one of the radially inward and radially outward directions.

Since each anti-separation portion 6c axially bulges most remarkably at the distal edge of the flange 6, it is possible to arrange the anti-separation portions 6c so as to overlap the outer peripheral portions of the convex rollers 6c with the gap g by most effectively utilizing the flange width.

In forming the anti-separation portions 6c, it is natural that they have curved surfaces. Taking this into consideration, the anti-separation portions 6c are formed such that the degree of axial bulge decreases gradually in the one of the radially inward and radially outward directions. Thus, each anti-separation portion 6c is relief-shaped such that its distance from the outer peripheral portion of the corresponding convex roller 5 gradually increases from the distal edge of the flange 6 in the one of the radially inward and radially outward directions. As a result, as shown in Fig. 4(c), it is possible to elastically deform e.g. the flange 6 by pressing the outer peripheral portions of the convex rollers 5 against the respective anti-separation portions 6c. This minimizes the amount of deformation of e.g. the flange 6 necessary to insert the rollers.

Since the distal edge of the flange 6 can be easily deformed by extrusion, by forming the anti-separation portions 6c such that they bulge axially most remarkably at the distal edge of the flange, they can be formed with a relatively small extrusion force.

Each anti-separation portion 6c is circumferentially widest at the distal edge of the flange 6, and its circumferential width decreases gradually in the one of the radially inward and radially outward directions.

When the anti-separation portions 6c are formed so as to axially bulge most remarkably at the distal edge of the flange 6, high rigidity is required for the anti-separation portions 6c. By forming the anti-separation portions 6c so as to circumferentially widest at the distal edge of the flange 6, it is possible to effectively increase the rigidity of the anti-separation portions 6c. Since the circumferential width of the anti-separation portions 6c decreases gradually in the one of the radially inward and radially outward directions, the anti-separation portions are relief-shaped in the circumferential direction too such that the rollers can be further easily inserted into the respective pockets.

The anti-separation portions 6c may be shaped freely as long as they can prevent separation of roller and serve other intended purposes. For example, while in the embodiment, each anti-separation portion 6c has a substantially conical shape having its apex located near the center of the retainer, it may have a substantially spherical shape.

In order to easily form the anti-separation portions by extrusion, they are bulged such that the anti-separation portions can engage only the chamfers of the outer peripheral portions of the respective convex rollers 5. This arrangement is also preferable in protecting the rolling surface of each convex roller 5 if the convex roller 5 rides onto a bridge 3. But if it is desired to more reliably prevent separation of rollers, the anti-separation portions may be bulged such that they can engage the rolling surfaces of the convex rollers 5.

As shown in Figs. 1 and 5, the recesses 6d, which are formed in the back of the flange 6 when forming the anti-separation portions 6c by extrusion, are continuous with the flat surface portions 6a and 6b.

Lubricant is held in the recesses 6d. Thus, since the recesses 6d are continuous with the flat surface portions 6a and 6b, lubricant in the recesses 6d is spontaneously supplied onto the flat surface portions 6a and 6b. Thus, when the flat surface portions 6a and 6b of the opposed pair of retainers 10 are brought into sliding contact with each other, the flat surface portions 6a and 6b are optimally lubricated.

The lubricant may be lubricating oil or grease.

The recesses 6d extend to the distal edge of the flange 6.

Since the recesses 6d extend to the distal edge of the flange 6, when the flat surface portions 6a and 6b of the opposed pair of retainers 10 are brought into sliding contact with each other, openings form between the flanges 6 due to the recesses 6d. Thus, lubricant in the bearing easily flows into the recesses 6d, so that the flat surface portions 6a and 6b can be effectively lubricated.

Since the anti-separation portions 6c of the punched retainers 10 are shaped such that at the distal edge of the flange 6, the anti-separation portions 6c axially bulge most remarkably, and their circumferential width is widest, it is possible to maximize the openings of the recesses 6d, so that lubricant in the bearing can easily flow into the recesses 6d.

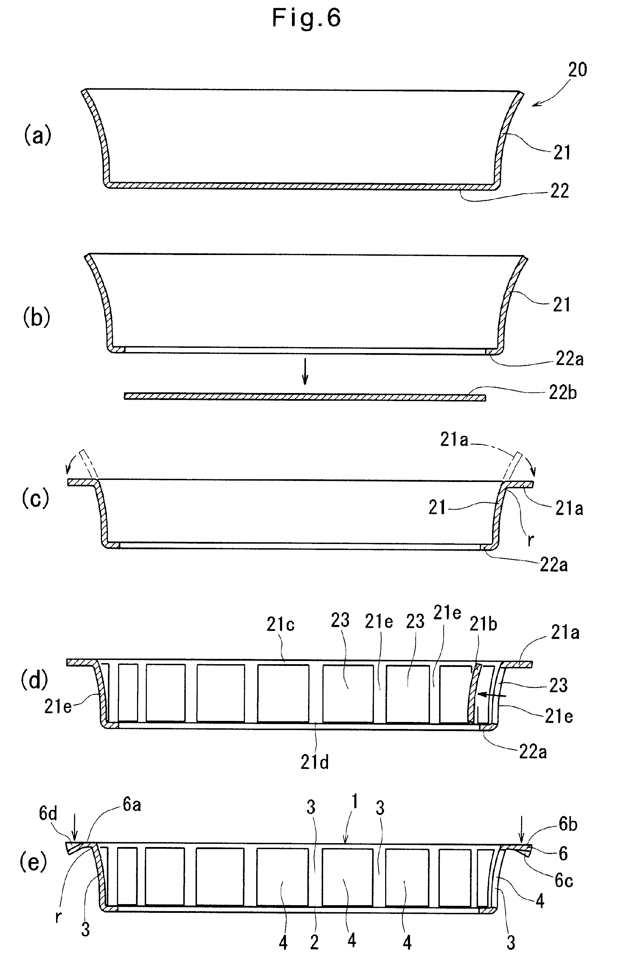

Now the method of the punched retainer 10 is described. As shown in Figs. 6(a) and 6(b), a metal sheet is formed into the annular member 20, which has a large-diameter end and a small-diameter end. For example, the annular member 20 can be formed by first forming cup member by deep-drawing a disk sheet, and punching the central portion 22b of the bottom 22 of the cup member except its peripheral edge 22a. When punching the bottom, s small flange is formed on the annular member 20, which forms the small-diameter annular portion. The bottom may be punched simultaneously with deep drawing.

Next, as shown in Fig. 6(c), the flange is formed by radially outwardly bending the one end 21a of the peripheral wall 21.

The bent portion r of the flange can be formed along a common circle over the entire circumference. With this arrangement, the flatness of both surfaces of the bent one end 21a of the peripheral wall 21 and its bent angle can be easily made uniform over the entire circumference. Thus, it is possible to form the flat surface portions on the one end 21a of the peripheral wall 21 simultaneously when the flange is formed.

Unlike the above-described conventional arrangement, since it is not necessary to form bent pieces as anti-separation portions, the flange can be formed before punching the pockets.

Next, as shown in Fig. 6(d), the pockets are formed by punching in the portion 21b between the ends of the peripheral wall 21.

The punching forms the annular portion 21c at the one end, which is part of the large-diameter annular portion, the annular portion 21d at the other end, which is part of the small-diameter annular portion, connecting portions 21e as the bridges, and holes 23 as the pockets.

This punching is performed at the portion of the peripheral wall 21 spaced from the bent portion r of the flange toward the other end.

By performing the punching at the portion spaced by a predetermined distance from the flange bent portion r toward the other end, punching can be performed even though the peripheral wall 21 has the one end 21a. As long as the flatness and the bent angle of the one end 21a of the peripheral wall 21 are not altered, the above predetermined distance can be freely determined. Since it is not necessary to form bent pieces as anti-separation portions and the annular portion 21c at the one end has no cut-out portions, the width of the annular portion 21c at the one end can be effectively used to form the flange so as to have a uniform width over the entire circumference.

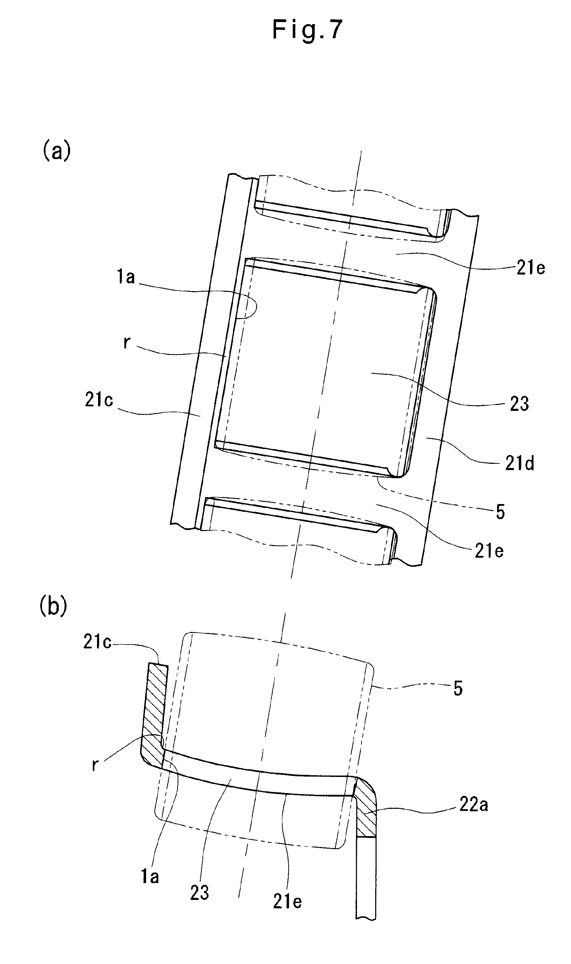

As shown in Figs. 7(a) and 7(b), the annular portion 21c at the one end is punched such that the punched section faces one end surface of the convex roller 5 held in each pocket 4. Thus, the roller guide surfaces 1a can be formed by punching only.

In the conventional arrangement, if the annular portion 21c at the one end is narrow in width, since the distance between the roller guide surfaces 1a and the flange bent portion r is short, the orientations of the roller guide surfaces 1a may be altered when forming the flange. Since the flange is formed before punching, even if the above distance is short, the roller guide surfaces 1a remain accurate. This is advantageous in forming the anti-separation portions after forming the flange. When forming the anti-separation portions on the flange, in order to shorten the protruding length toward the front side of the flange, the distance from the inner periphery of the pockets is preferably shorter, because with this arrangement, the distance between the roller guide surfaces 1a and the flange bent portion r is short.

Next, as shown in Fig. 6(e), the one end 21a of the peripheral wall 21 is subjected to extrusion molding from the one end toward the other end.

After punching, the anti-separation portions 6c and the recesses 6d are formed by extrusion molding. The flange 6 is thus formed. Utilizing the extrusion molding, it is possible to ensure precision of the flat surface portions 6a and 6b.

By pressing the surfaces of the connecting portions 21e, the bridges 3 and the pockets 4 are formed.

With this punched retainer 10, since the inner periphery of each pocket 4 includes the punched section of the large-diameter annular portion 1, the roller guide surfaces 1a can be formed by punching only, which is an indispensable step. With this arrangement, since the bent portion r of the flange 6 can be formed at the portion of the peripheral wall 21 where the large-diameter portion 1 is formed over the entire circumference, the flatness of both surfaces of the one end 21a, which is formed into the flange 6, and its bent angle, as well as the flatness of the front and back surfaces of the flange 6 and its bent angle can be made uniform over the entire circumference. Thus, with this punched retainer 10, the flange 6 and the roller guide surfaces 1a can be easily formed with high precision.

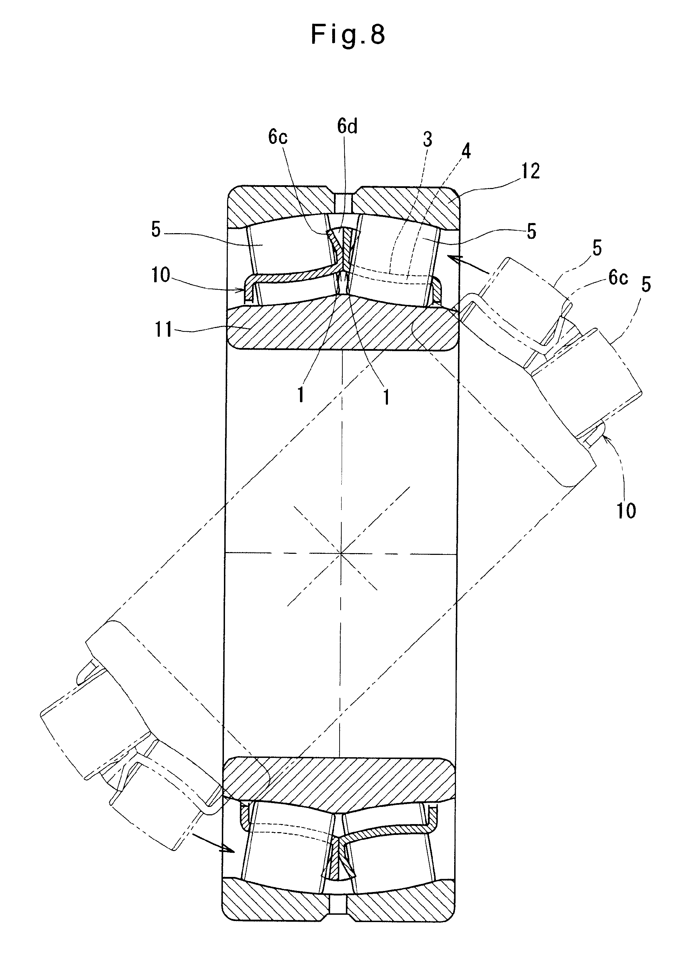

How to use the punched retainer 10 is now described. The punched retainer 10 has the anti-separation portions 6c in order to prevent separation of the rollers when during the assembling step of Fig. 8. In particular, by providing the anti-separation portions, the assembly of one of the inner and outer races (inner race 11 in the embodiment), and the opposed pair of punched retainers 10 superposed on the respective raceways of the inner race 11 can be turned as shown in Fig. 8 to assemble the self-aligning roller bearing. At this time, the anti-separation portions located on both circumferential sides of each pocket 4 engage the outer peripheral portion of the convex roller 5, thereby preventing separation of the convex roller 5 in the other of the radially inward and radially outward directions. When, as in this example, the assembly of the punched retainers 10, the convex rollers 5 and the inner race 11 is mounted to the outer race 12, if the bridges 3 located radially outwardly of the PCD, the inner race 1 will interfere with the convex rollers 5, making it difficult to mount the rollers in the respective retainers. To avoid this problem too, the bridges 3 are located radially inwardly of the PCD.

When the assembly is rotated in the above-described manner, as shown in Fig. 1, the self-aligning roller bearing is assembled with the opposed pair of retainers 10 disposed between the inner and outer races 11 and 12.

The self-aligning roller bearing according to the first embodiment does not include a guide ring disposed between the inner and outer races 11 and 12.

Since only with the opposed flat surface portions 6a and 6b, which are brought into sliding contact with each other, it is possible to prevent skew behavior of the punched retainers 10, it is possible to omit the guide ring and the intermediate flange, thus reducing the number of component parts of the self-aligning roller bearing and thus its cost.

Oil holes 12a are formed in the other of the inner and outer races (outer race 12 in the embodiment) through which lubricant is fed into the recesses 6d.

With the self-aligning roller bearing of the first embodiment, since the recesses 6d, which are formed when the anti-separation portions 6c are formed by bulging, extend to the distal edge of the flange 6, and are continuous with the flat surface portions 6a and 6b, and further, there are no guide ring, lubricant supplied through the oil holes 12a can easily flow into the recesses and thus can be smoothly supplied onto the flat surface portions 6a and 6b.

The present invention is not limited to the first embodiment and various modifications are feasible as long as the object of the invention is achievable. Only one, some or all of the various structures for achieving the above-mentioned various objects may be employed in the present invention.

For example, if the outer race, punched retainers and rollers are combined into an assembly, the bridges are positioned radially outwardly of the PCD and the flanges are bent radially inwardly.

The anti-separation portions for preventing separation of the convex rollers 5 in the other of the radially inward and radially outward directions are formed at any positions as long as they are located offset from the flange bent portion.

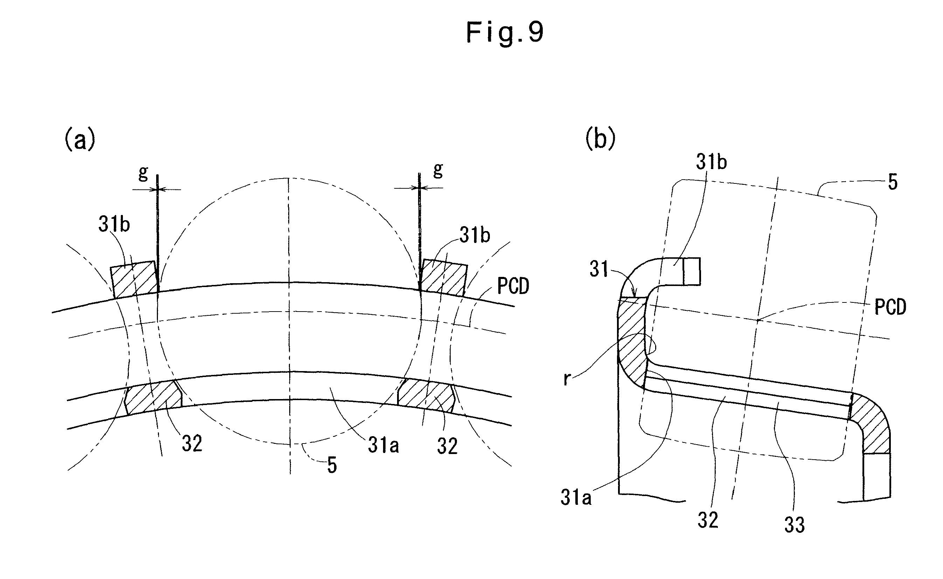

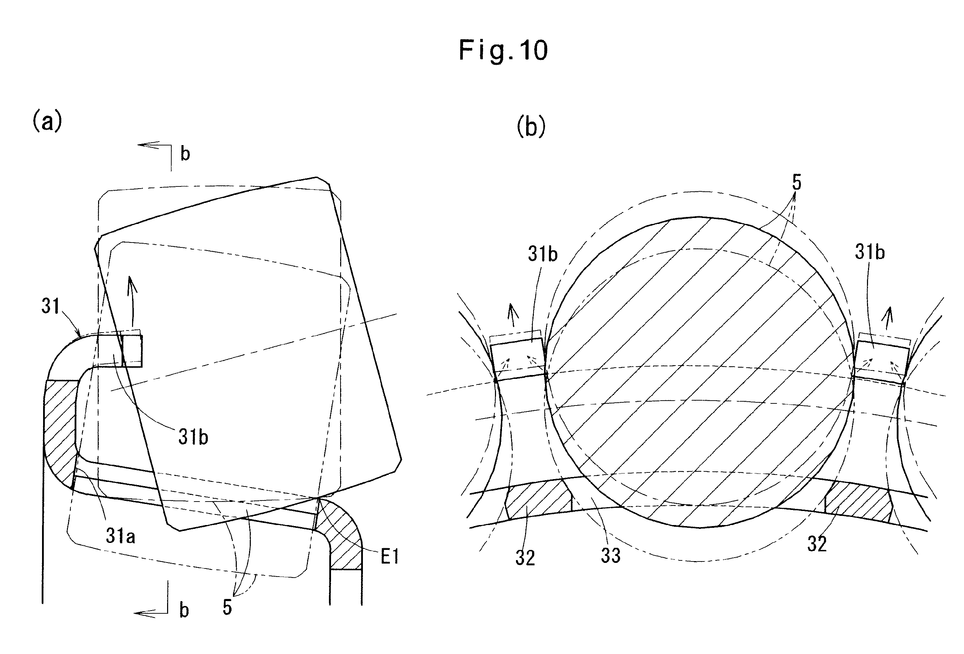

For example, in the second embodiment shown in Figs. 9(a), 9(b), 10(a) and 10(b), bent pieces are formed that extend from the distal end of a flange 31, rollers guide surfaces 31a are formed by punching, and anti-separation portions 31b are formed by plastic deformation of the bent pieces. The portion between any adjacent anti-separation portions 31b is elastically expanded when the convex roller 5 is pushed in from the other of the radially inward and radially outward directions relative to the bridges 32 on both sides. Thus, the convex rollers 5 can be fitted in the respective pockets 33. Once the respective rollers are fitted in the pockets, the anti-separation portions 31b elastically recover and overlap the outer peripheral portions of the respective convex rollers 5 from the other of the radially inward and radially outward directions with a gap g.

If a recess is formed in one end surface of each convex roller, the anti-separation portions may be formed on the large-diameter annular portion or the small-diameter annular portion. Alternatively, a protrusion may be formed on the punched section defining the inner periphery of each pocket so that when each convex roller is pushed in with one of the chamfers first, the protrusion is pushed away due to elastic deformation of the retainer and then engaged in the recess due to elastic recovery.

As long as each roller guide surface can be brought into sliding contact with the is roller while being kept 1 with respect to the axial plane including the rotation axis of the roller, the rolling motion of the roller never becomes unstable due to a difference in contact resistance. Thus, if the anti-separation portion is formed on the circumferentially central portion of the axially inner surface of the large-diameter annular portion that defines the inner periphery of each pocket, the above two symmetrical roller guide surfaces can be formed.

Instead of guiding the retainers with the rolling elements using the bridges of the retainer, the retainers may be guided by the bearing rings using flanges of the large-diameter and small-diameter annular portions, by forming the distal edges of the flanges so as to extend along a circle. Guiding the retainers with the rolling elements is preferable to guiding the retainers with the bearing rings, because with the former arrangement, there is scarcely a difference in revolving speed between the retainers and the rollers.

The above-described anti-separation portions may be used not only for punched retainers for convex rollers but for punched retainers for use with e.g. tapered rollers and cylindrical rollers.

With the above-described conventional punched retainer, it is necessary to form a recess in one end surface of each roller in which the corresponding anti-separation portion is adapted to engage. This increases the manufacturing cost of the rollers. Also, as explained above, if a deep recess cannot be formed in the end surface of the roller, it is necessary to correspondingly reduce the size of the anti-separation portions. Such small anti-separation portions tend to quick become worn to such an extent that they cannot prevent separation of the rollers. If this happens, rollers may separate from the bearing when the bearing is disassembled for maintenance.

JP Patent Application 2007-105884 discloses anti-separation means 31b as shown in Figs. 9 and 10, which can prevent separation of rollers without the need to form recesses in end surfaces of the rollers.

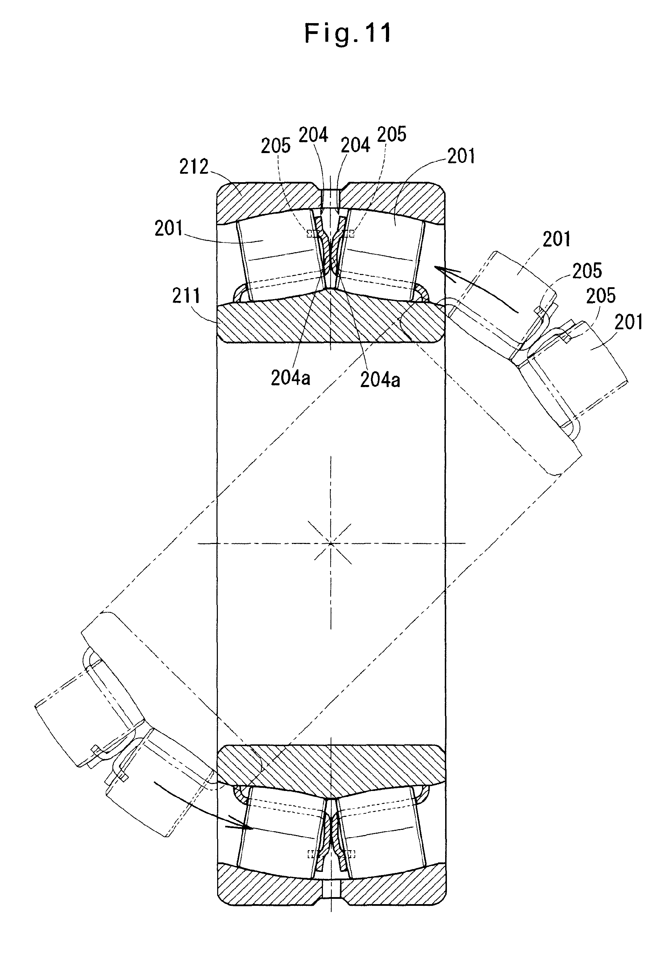

The punched retainers shown in Figs. 11 to 13 are disclosed in JP Patent Application 2007-105884 and are used for a self-aligning roller bearing. Each of the punched retainers include bridges 202 which are, with rollers 201 disposed between inner and outer races 211 and 212, located offset from the PCD in one of the radially inward and radially outward directions. Bridges 202 defining each pocket 203 therebetween are adapted to prevent separation of the roller 201 in the pocket 203 in the one of the radially inward and radially outward directions. The retainer further includes an annular portion at one end including a flange 204 formed by bending the annular portion in the other of the radially inward and radially outward directions. The flange 204 has anti-separation portions 205 for preventing separation of the rollers 201 in the other of the radially inward and radially outward directions.

The punched retainers shown in Figs. 11 to 13 comprise metal sheets and formed e.g. by pressing steel sheets.

The two bridges 202 defining each pocket 203 have their circumferential ends subjected to surface pressing to receive the outer peripheral portion of the roller 201 rolling in the pocket. The distance between the circumferential ends of the two bridges 202 is smaller than the maximum diameter of the roller 201 to prevent the roller 201 from radially inwardly separating from the pocket 203. The circumferential end of one of the two bridges 202 in front of the roller with respect to the revolving direction of the roller receives the outer peripheral portion of the roller 201. Thus, the punched retainer is guided in the radial direction under the radial component force. Under normal operating conditions, the roller 201 never ride onto either of the two bridges 202. With these punched retainers, the bridges 202 are located radially inwardly of the PCD because with this arrangement, the radial component force applied to the punched retainer when the rollers 201 roll and their outer peripheral portions contact the circumferential ends of the respective bridges 202 is large compared to the arrangement in which the bridges 202 are located radially outwardly of the PCD, so that the punched retainer can be more easily radially guided. In the higher strength of the bridges 202 is more important, it is possible to increase the circumferential width of the bridges 202 without reducing the number of rollers, by moving the bridges radially outwardly so as to be located on a larger circle.

The anti-separation portions 205 comprise bent pieces extending from the distal end of the flange 204. The bent pieces are plastically bent so as to overlap the outer peripheral portions of the respective rollers 201 from the other of the radially inward and radially outward directions with a gap g left therebetween. The gap g prevents the anti-separation portions 205 from contacting the outer peripheral portions of the rollers 201 during normal operation.

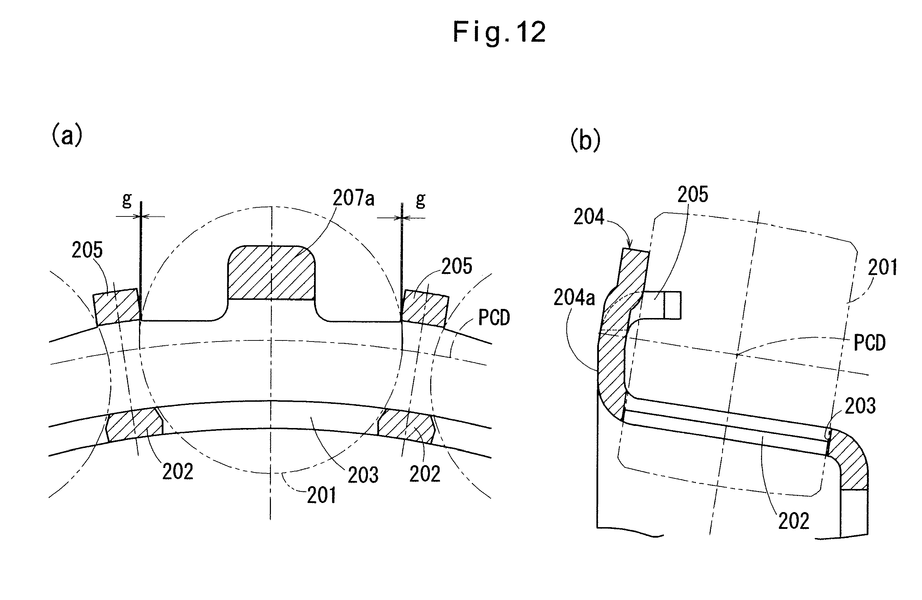

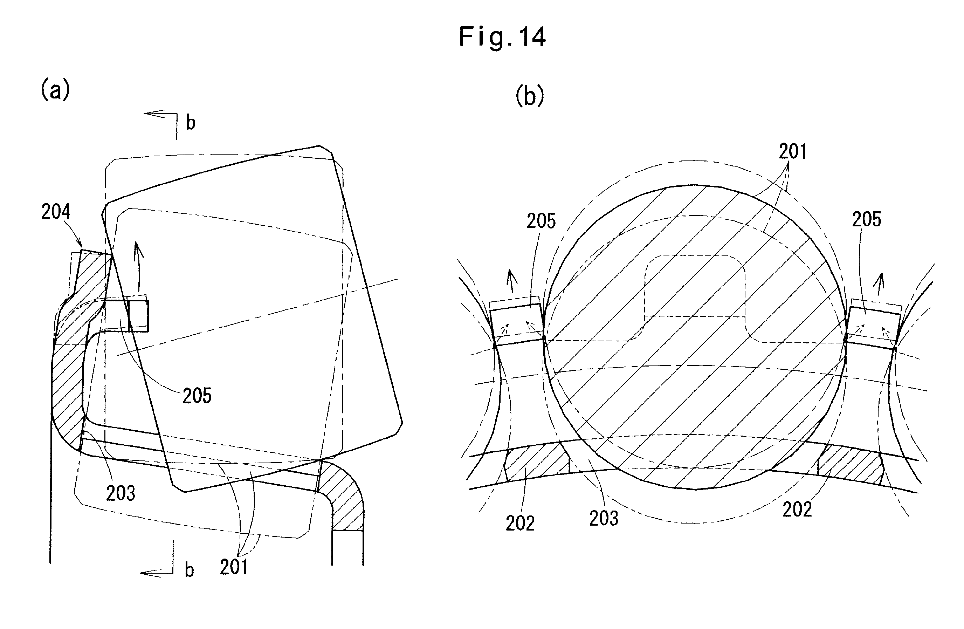

As shown in Figs. 14(a) and 14(b), the portion between any adjacent anti-separation portions 205 is elastically expanded when the roller 201 is pushed in from the other of the radially inward and radially outward directions relative to the bridges on both sides. Thus, the rollers 201 can be fitted in the respective pockets 203. Once the respective rollers are fitted in the pockets, the anti-separation portions 205 elastically recover to the state shown in Fig. 12(a) and overlap the outer peripheral portions of the respective rollers 201 from the other of the radially inward and radially outward directions with a gap g. Thus, the anti-separation portions 205 prevent separation of the rollers in the other of the radially inward and radially outward directions, irrespective of the end surfaces of the rollers 201. Since the anti-separation portions are elastically deformed, it is not necessary to adjust the gaps g.

In assembling the self-aligning roller bearing, as shown in Fig. 11, the inner race 211, the punched retainers and the rollers 201 are combined into an assembly. In this assembled state, the roller 201 in each pocket 203 is prevented from separating from the pocket both radially inwardly and radially outwardly by the two bridges 202 and the two anti-separation portions. Thus, when the assembly is turned from the position shown by two-dot chain line in Fig. 11, in which the central axis of the assembly intersects the central axis of the outer race 212 with the assembly located inside the outer race 212, until the central axes of the assembly and the outer race 212 coincide with each other, the rollers 201 never separate from the punched retainers.

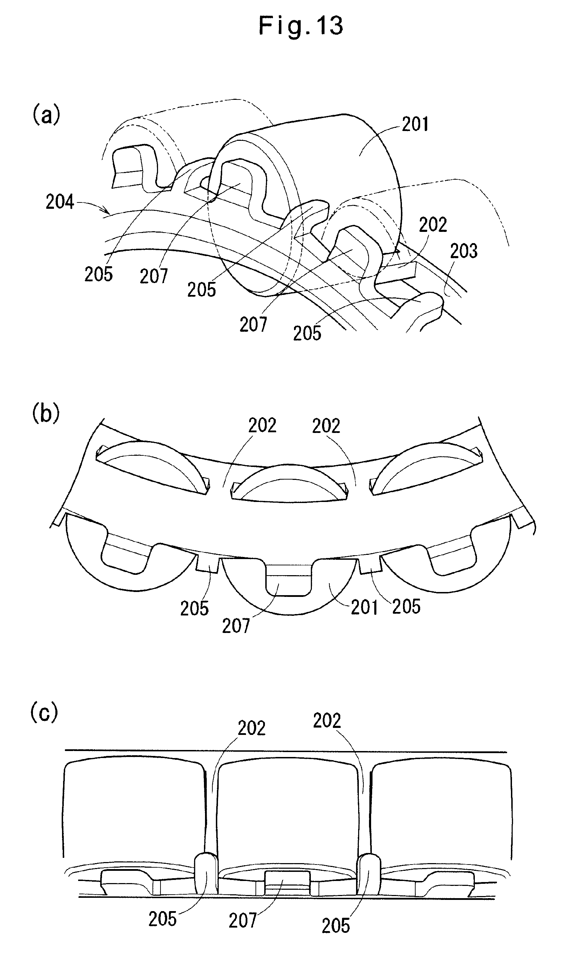

As shown in Figs. 12(b) and 13(a) to 13(c), flat surface portions 204a are formed on the backs of the flanges 204 of the respective identically shaped punched flanges so as to be brought into sliding contact with each other. On the front side of the flange 204, roller support surfaces 207a are formed for reducing skew behavior of the rollers 201. By forming the roller support surfaces 207a on the front side of the flange 204, it is possible to prevent the positional relationship between the end surfaces of the rollers 201 and the roller support surfaces 207 from changing due to axial loads, thus stably preventing skew behavior of the rollers 201. In particular, with these punched retainers, when the bent pieces are formed by punching, a protrusion 207 is formed at an intermediate portion between each circumferentially adjacent pair of the anti-separation portions 205, and the roller support surface 207a is formed by extruding each protrusion 207 to the front side. If any roller 20 shows skew behavior, the corresponding roller support surface 207a contacts the end surface of the roller 201. At this time, as shown in Fig. 11, the flat surface portion 204a of the flange 204 which supports the skew behavior of the roller 201 is brought into sliding contact with the flat surface portion 204a of the other opposed flange 204 and thus the former flange is supported by the latter flange. The roller support surfaces 207a guide the respective rollers 201 while preventing their skew behavior.

With these punched retainers too, the roller guide surfaces 31a as shown in Figs. 9(a), 9(b) and 10(a) can be formed.

While the punched retainers disclosed in JP Patent Application 2007-105884 have various superior characteristics as described above, they also have room for improvements in the following points (I) to (III).

(I) Since the bent pieces as the anti-separation portions 205 are formed by punching the flange 204, edges form along the surfaces of the anti-separation portions 205. Also, since there is a clearance between the punch and the die, circumferential ends of the anti-separation portions 205 have punched sections which are high in roughness due to shearing. Such edges and punched sections never contact the outer peripheral portions of the rollers 201 during normal operation. But if there arises a difference in revolving speed between the rollers 201 and the retainers while the bearing is being accelerated or decelerated sharply, e.g. edges of the anti-separation portions 205 may contact the outer peripheral portions of the rollers 201. If this happens, the outer peripheral portions of some rollers 201 may be damaged or broken. This problem is solved by finishing the anti-separation protrusions 205 to smoothen e.g. the edges. But this is troublesome.

(II) Since the anti-separation portions 205 comprise the bent pieces, the sectional area of the continuous portions between the anti-separation portions 205 and the flange 204 is small. Since these continuous portions are bent portions, if excessive external force is applied to the anti-separation portions 205 as a result of contact between the anti-separation portions and the rollers or during handling of the baring, stress tends to concentrate on the continuous portions, which could bend, break or otherwise damage the anti-separation portions 205.

(III) When the bent pieces are formed by bending, since the bent pieces protrude into air, it is difficult to form them to required precision due to uneven distribution of the material composition or uneven internal stress.

Thus, in a punched flange in which each roller is prevented from separating in one of the radially inward and radially outward directions by the contact between the outer peripheral portion of the roller in each pocket and the two bridges defining the pocket, in which a flange bent in the other of the radially inward and radially outward directions is formed on an annular portion at one end, and anti-separation portions are formed on the flange for preventing separation of the rollers in the other of the radially inward and radially outward directions, the anti-separation portions preferably comprise bulges formed by extrusion molding on the flange at portions between the circumferentially adjacent pockets so as to protrude toward the front side so that when each roller is pushed into the pocket while elastically deforming the flange, the two anti-separation portions corresponding to the two bridges defining the pocket overlap the outer peripheral portion of the roller from the other of the radially inward and radially outward directions with a gap left therebetween.

That is, by using anti-separation portions comprising the above-described bulges, such as the anti-separation portions 6c shown e.g. in Fig. 1, the anti-separation portions overlap the outer peripheral portions of the respective rollers from the other of the radially inward and radially outward directions with a gap left therebetween. Thus, it is possible to prevent separation of rollers without the need to form recesses on end surfaces of the rollers. Since the anti-separation portions are formed by extrusion molding of the flange, the anti-separation portions have no free ends separated from the flange. This increases the sectional area of the continuous portions between the anti-separation portions and the flange. The anti-separation portions can thus be more easily bent relative to the flange than the anti-separation portions formed by bending. Thus even if the outer peripheral portion of a roller contacts the corresponding anti-separation portions under abnormal operating conditions as described above, the anti-separation portions are less likely to be damaged. Since the anti-separation portions are formed by extrusion molding using a die, the anti-separation portions can be formed with high precision. Also, since the anti-separation portions are formed by extrusion molding of the flange, the anti-separation portions have no punched sections, so that the outer peripheries of the rollers make surface contact with the surfaces of the bulges under the above-described abnormal conditions. This prevents oil film on the outer peripheral portions of the rollers from being scraped off, or the outer peripheral portions of the rollers from being damaged by the rough punched sections, thus minimizing the possibility of breakage of the outer peripheral portions of the rollers.

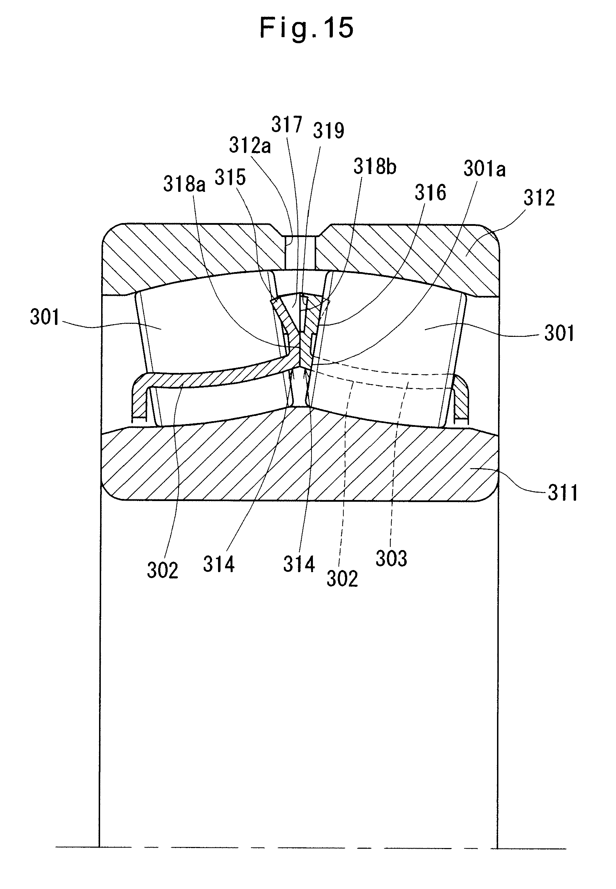

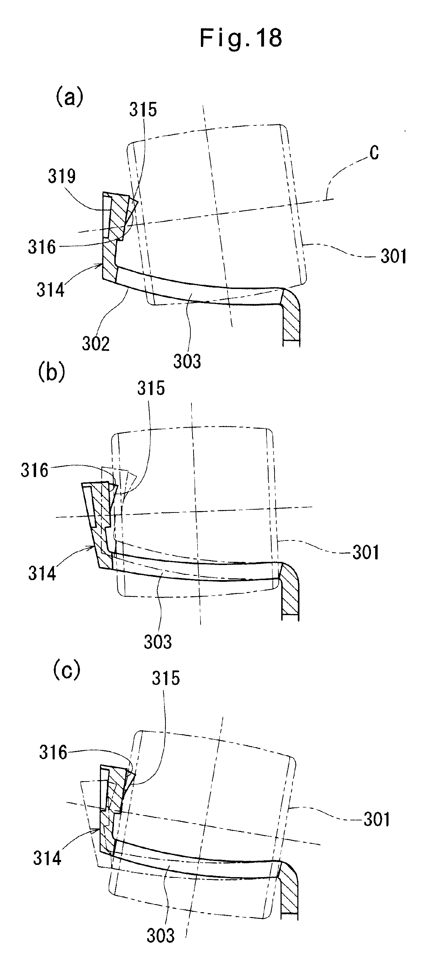

Figs. 15 to 18(a)-18(c) show the third embodiment, which is directed to different punched retainers which use anti-separation portions comprising bulges. Each of the punched retainers of the third embodiment includes bridges 302 which are located, with rollers 301 disposed between inner and outer races 311 and 312, offset from the pitch circle PCD including the rotation axes of the respective rollers 301 and having a pitch circle diameter in one of radially inward and radially outward directions. (This pitch circle is hereinafter simply referred to as "PCD".) The two bridges 302 defining each pocket 303 prevent separation of the roller 301 in the pocket 303 in the one of the radially inward and radially outward directions. Each retainer further includes a flange 314 formed by bending an annular portion at one end in the other of the radially inward and radially outward directions. Anti-separation portions 315 are formed on the flange 314 for preventing separation of the rollers 301 in the other of the radially inward and radially outward directions. The anti-separation portions 315 are identical to the anti-separation portions 6c shown e.g. in Fig. 1. Description of elements corresponding to those of the first embodiment and those disclosed in JP Patent Application 2007-105884 is omitted.

As shown in Fig. 15, the punched retainers of the third embodiment may also be provided with roller guide surfaces 301a. Needless to say, the anti-separation portions comprising the bulges are provided irrespective of whether or not the roller guide surfaces 301a are formed.

In order to guide retainers of the self-aligning roller bearing with rollers, flat surface portions are formed on the backs of the respective flanges 314 which are brought into sliding contact with each other. On the front side of each flange 314, roller support surfaces 316 are formed for reducing skew behavior of the rollers 301.

By forming the roller support surfaces 316, the end surfaces of the rollers 301 in either row is prevented from being separated from the roller support surfaces 316, irrespective of the state of axial loads applied to the roller bearing. This stably prevents skew behavior of the rollers 30.

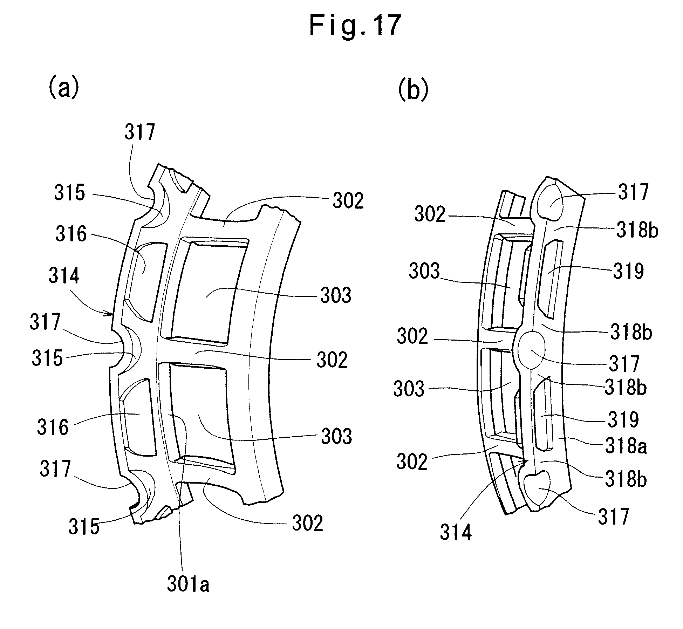

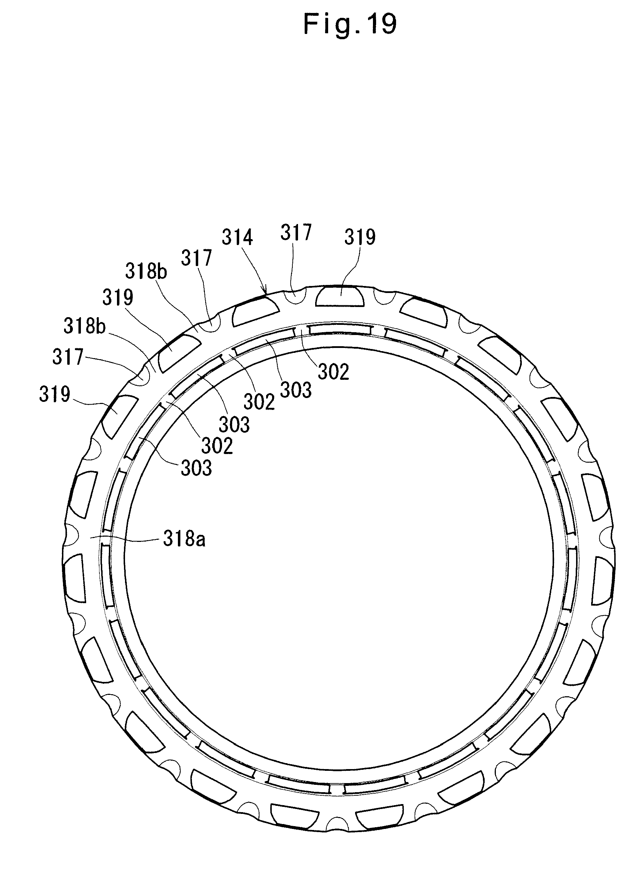

As shown in Figs. 17(a), 17(b) and 19, the flat surface portion of the flange 314 extends along a radial plane in view of sliding contact properties during operation, and comprises a main contact area 318a offset from recesses 317 formed when the anti-separation portions 315 are formed by extrusion in the one of the radially inward and radially outward directions, and auxiliary contact areas 318b located between the circumferentially adjacent recesses (the entire flat surface portion is hereinafter referred to by the numerals "318a, 318b"). The main contact area 318a and the auxiliary contact areas 318b correspond, respectively, to the flat surface portion 6a and the flat surface portions 6b shown e.g. in Fig. 1.

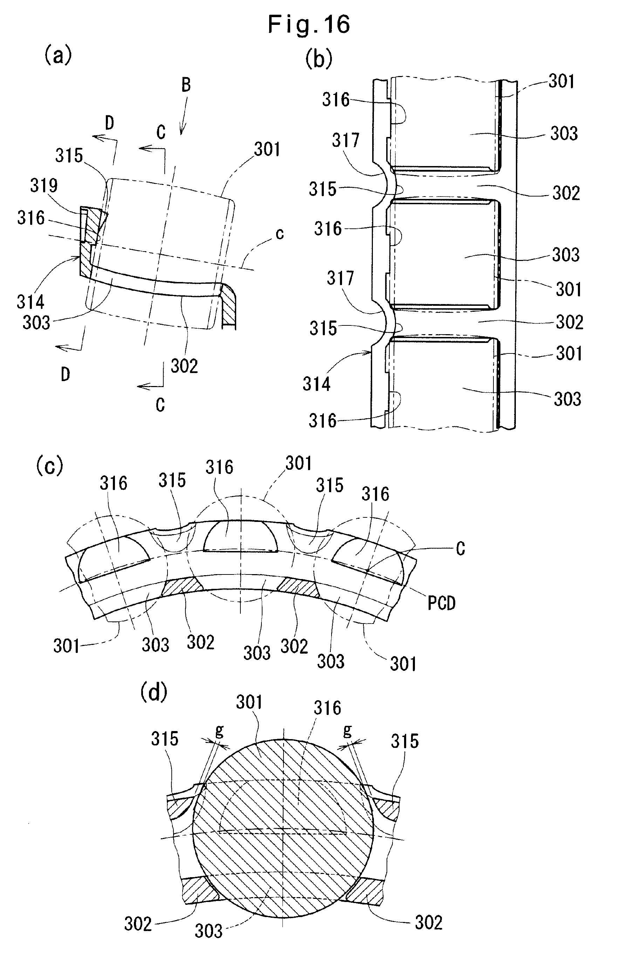

As shown in Figs. 16(a)-16(d), 17(a)-17(b) and 19, the roller support surfaces 316 are formed by extrusion molding on the front side of the flange 314 between the circumferentially adjacent anti-separation portions 315. Recesses 319 are formed on the back of the flange 314 when the roller support surfaces 316 are formed by extrusion.

Since the distal edge of the flange 314 extends along a circle and has no cut-out portions, it is possible to form the roller support surfaces 316 between the circumferentially adjacent anti-separation portions 315. Such roller support surfaces can be formed by extrusion molding. Unlike protrusions formed by punching the flange 314, by forming the roller support surfaces 316 by extrusion molding, the roller support surfaces 316 have no punched sections. When end surfaces of the rollers 301 contact the roller support surfaces 316 while being guided by the rollers, the end surfaces are pressed against the roller support surfaces 316. At this time, since the roller support surfaces 316 have no punched sections, the end surfaces of the rollers 301 never contact edges or rough sections. This prevents oil film on the end surfaces of the rollers 301 from being scraped off and the end surfaces of the rollers 301 from being scratched, thus preventing damage to the end surfaces of the rollers 301.

Each roller support surface 316 intersects the rotation axis C of the corresponding roller 301 and is circumferentially symmetrical.

The roller support surfaces 316 are pressed against the end surfaces of the rollers 301 and thus contact the end surfaces of the rollers 301 over the entire area thereof. With the roller support surfaces 316 in contact with the roller end surfaces over the entire area, if there arises a difference in slip resistance between one and the other circumferential sides of an axial plane including the rotation axis of each roller 301 (shown by one-dot chain line in Fig. 16(c), which intersects the PCD), the rotation of the roller becomes unstable. Thus, the roller support surfaces 316 are ideally formed symmetrical with respect to the rotation axes C of the respective rollers. If roller support surfaces are formed on protrusions formed by partially cutting off the distal edge of the flange in the width direction, it is impossible to form the roller support surfaces so as to be symmetrical with respect to the rotation axes of the respective rollers.

By forming the roller support surfaces 316 by extrusion molding, it is possible to form such roller support surfaces 316 on the portions of the flange that intersect the rotation axes C of the respective rollers 301 so as to be circumferentially symmetrical. By forming such roller support surfaces 316, it is possible to reduce the difference in slip resistance while being guided by the rollers, which makes it possible to further stabilize roller behavior.

Since lubricant flows into the recesses 319 and is supplied onto the flat surface portion 318a, 318b, the flat surface portion 318a, 318b can be optically lubricated.

Punched retainers using the above-described anti-separation portions and roller support surfaces are not limited to those of the second and third embodiments, and these embodiments may be variously modified. For example, the bridges may be located radially outwardly of the PCD, the retainers may be modified for retaining tapered rollers or cylindrical rollers, or modified to be guided by bearing races.

For example, in tapered roller bearings, except for pin-shaped welded retainers used in super-large-sized bearings and resin retainers for vehicle bearings such as disclosed in JP Patent Publication 2006-22824A, punched retainers of the roller guided type in which each roller is embraced by bridges on both sides and an inner race having flanges at both ends are widely used. If the inner race having flanges at both ends, the punched retainer and the rollers are combined into an inner race assembly, as disclosed in JP Patent Publications 2002-295482A and 2004-293698A, during the manufacturing stage of the punched retainer, the small-diameter end of the retainer is plastically deformed to expand its bottom, the tapered rollers are inserted into the respective pockets from the small-diameter end of the punched retainer until they are located on the raceway of the inner race, and the small-diameter end of the retainer is caulked. Thus, to form this assembly, a bottom-expanding die and a caulking die, as well as the corresponding steps are necessary. Also, for caulking, a separate retainer is necessary to determine the bottom dead center of the pressing machine. When forming an inner race assembly for a cylindrical roller bearing too, these steps and parts are necessary. Thus punched retainers for tapered roller bearings and cylindrical roller bearings are desired which need no bottom expansion and caulking and of which anti-separation portions are never broken during operation.

Now various reference modes are described in which punched retainers having anti-separation portions comprising bulges as described above are used in roller bearings. Below, only what differs from the above-described embodiments are mainly described and description of elements corresponding to those of the above embodiments are omitted.

A punched retainer according to Reference Mode 1 can be formed into an inner race assembly by positioning the pockets of the retainer on the raceway of an inner race having flanges at both ends, and pushing the rollers into the respective pockets.

A punched retainer according to Reference Mode 2 is of the bearing race guided type using the outer peripheries of the flanges on the inner race of Reference Mode 1 and the inner peripheries of the annular portion at one end and the annular portion at the other end.

A punched retainer according to Reference Mode 3 has a second flange formed on the annular portion at the other end which is bent in the other of the radially inward and radially outward directions. The distal end of the second flange is located closer to the other end surfaces of the rollers than are the inner peripheral portions of the pockets formed on the annular portion at the other end.

A punched retainer according to Reference Mode 4 has a second flange formed on the annular portion at the other end which is bent in the other of the radially inward and radially outward directions. The second flange has second anti-separation portions formed on its portions between the circumferentially adjacent pockets by extrusion molding so as to bulge toward the back side thereof. Thus, each roller can be pushed through spaces between two adjacent anti-separation portions and the corresponding two second anti-separation portions into the pocket.

A punched retainer according to Reference Mode 5 has oil windows formed in the flange at portions between the circumferentially adjacent anti-separation portions so as to open to back and front sides thereof.

A punched retainer according to Reference Mode 6 differs from Reference Example 2 in that at least one oil groove is formed in each of the inner periphery of the annular portion at the one end and the inner periphery of the annular portion at the other end so as to extend the entire width thereof.

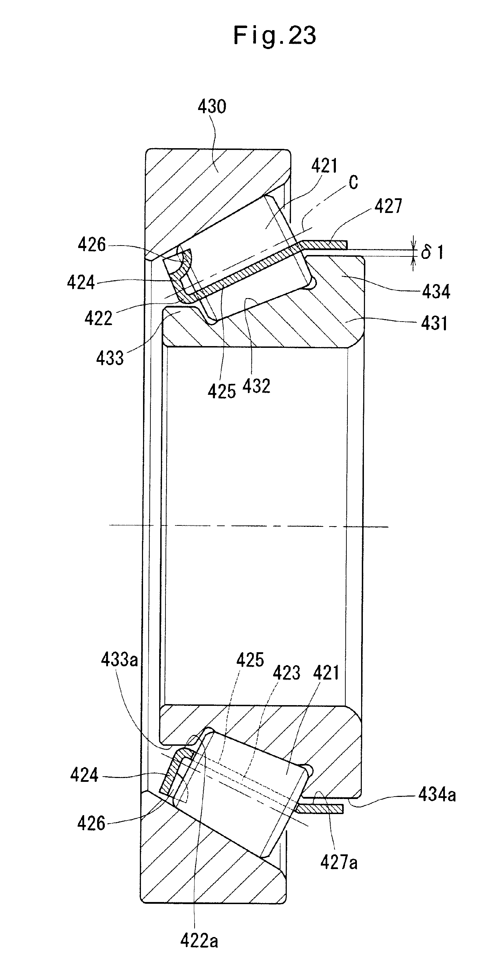

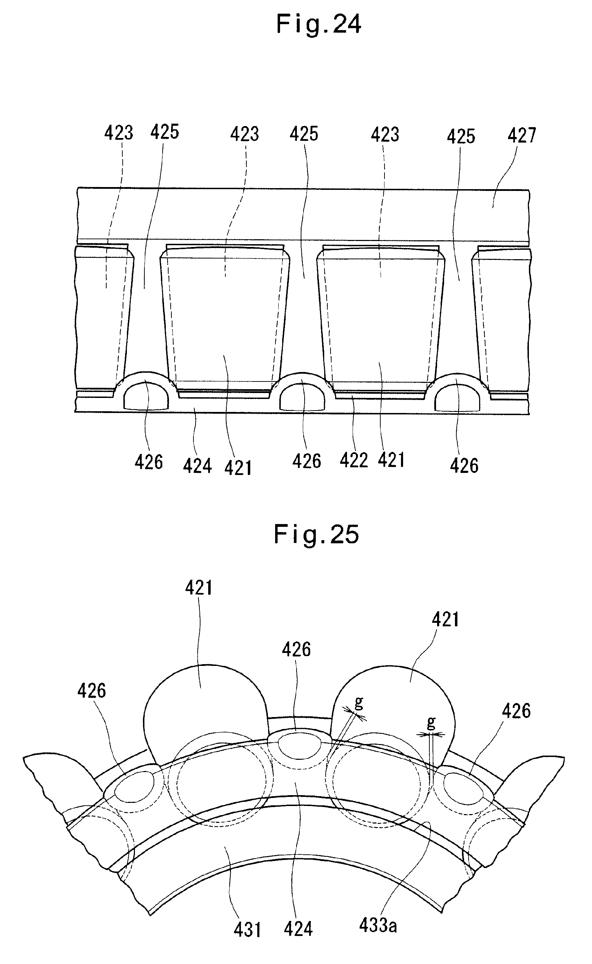

Figs. 23 to 25 show Reference Example 1, which is one example of Reference Modes 1 and 2. As shown, the rollers 421 of Reference Example 1 are tapered rollers. The annular portion 422 at the one end is a small-diameter annular portion. The outer race 430 is a separate type bearing race. The inner race 433 has flanges at both ends of which the flange 433 at the one end is a small flange and the flange 434 at the other end is a large flange.

The punched retainer according to Reference Example 1 is not subjected to bottom expansion. This punched retainer can be positioned coaxially with the inner race 431 with the pockets 423 located on the raceway 432 of the inner race 431. With the pockets 423 located on the raceway 432, when the rollers 421 are pushed into the respective pockets 423, the flange 424 is pushed by one end surface of each roller 421 and falls. Thus, the other end surface of each roller 421 enters the pocket 423 and the rollers 421 are located between the flanges 433 and 434. In this state, each roller is embraced by the two bridges 425 on both sides, the corresponding two anti-separation portions 426, the raceway 432 of the inner race 431, and the flanges 433 and 434. Thus, the punched retainer, the rollers 421 and the inner race 431 are integrally assembled together. In other words, the inner race assembly can be formed simply by pushing the rollers 421 into all of the pockets 423.

With the punched retainer according to Reference Example 1, the inner race assembly can be formed using an inner race having flanges at both ends, without the need for bottom expansion and caulking. During normal operation, a gap g formed between the rollers and the respective anti-separation portions, so that the rollers and the anti-separation portions are less likely to be damaged. Even if rollers 421 collide against the anti-separation portions 426 during abnormal operation, the anti-separation portions 426, which comprise bulges, are less likely to be broken, and the outer peripheral portions of the rollers 421 are less likely to be damaged.

The punched retainer according to Reference Example 1 is not the roller guided type but the bearing race guided type and is adapted to be guided in the radial direction. In particular, this retainer is the bearing race guided type using the outer peripheries of the flanges 433 and 434 of the inner race 431 and the inner peripheries of the annular portion 422 at the one end and the annular portion 427 at the other end. Cylindrical retainer guide surfaces 433a and 434a are formed on the outer peripheries of the flanges 433 and 434, respectively. On the inner peripheries of the annular portion 422 at the one end and the annular portion 427 at the other end, guided portions 422a and 427a are respectively formed which faces the respective retainer guide surfaces 433a and 434a and are located on imaginary cylindrical surfaces having radii larger by δ1 than the radii of the respective retainer guide surfaces 433a and 434a. Thus, when, during operation, the punched retainer moves in any radial direction relative to the inner race by the distance δ1, the guided portions 422a and 427a are brought into contact with the respective retainer guide surfaces 433a and 434a so as to slide in the circumferential direction. With this bearing race guided arrangement using the outer peripheries of the flanges 433 and 434, the annular portions 422 and 427 at both ends can be moved in the other of the radially inward and radially outward directions to the maximum, so that the bridges 425 can also be moved in this direction to the maximum. This makes it possible to maximize the number of rollers and/or the diameter of the rollers.

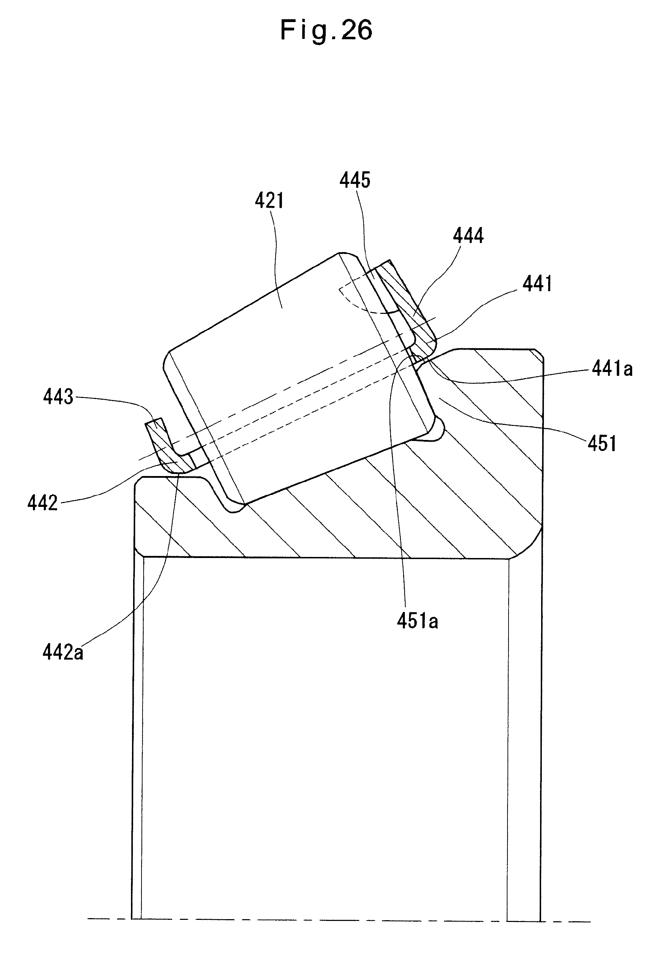

Fig. 26 shows Reference Example 2, which is a modification of Reference Example 1. As shown, the annular portion 441 at the one end of Reference Example 2 is a large-diameter annular portion. The annular portion 442 at the other end has a second flange 443 formed by bending in the other of the radially inward and radially outward directions. By providing the second flange 443, the rigidity of the entire retainer increases. By bending the second flange 443 in the other of the radially inward and radially outward directions, the guided portion 442a is formed.

Since the flange 444 and the anti-separation portions 445 are formed on the annular portion 441 at the one end, the guided portion 441a is formed on the inner periphery of the annular portion 441 at the one end so as to be located on an imaginary conical surface Thus, the retainer guide 451a formed on the outer periphery of the flange 451 at the one end is correspondingly conical in shape.

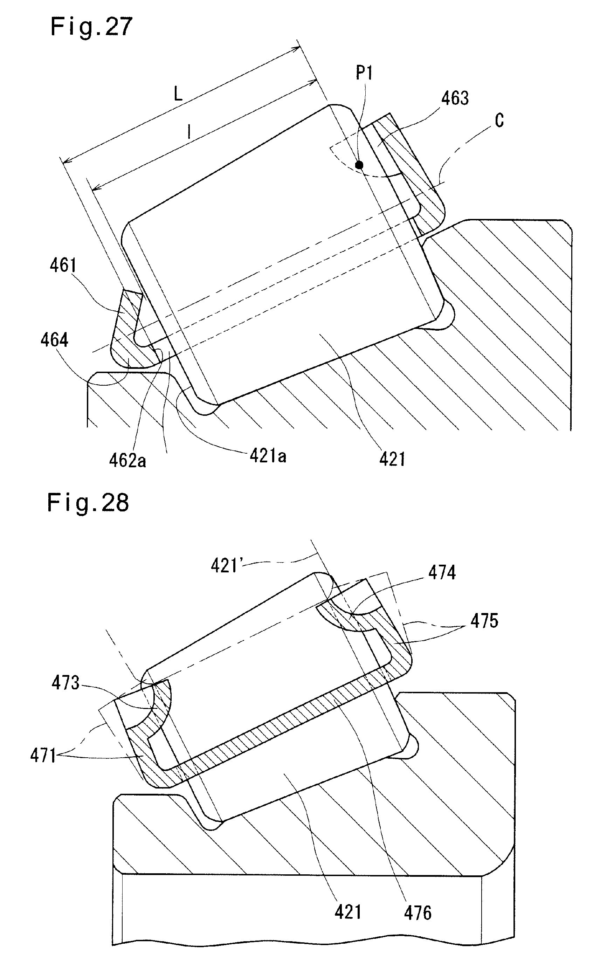

Fig. 27 shows Reference Example 3, which is one example of Reference Mode 2 and is a modification of Reference Example 2. The second flange 461 of the Reference Example 3 is bent toward the one end. Now consider the contact points P1 where the roller 421 in each pocket 462 contacts the anti-separation portions 463 on both sides when the roller 421 moves from the normal position where it is in contact with the flange guide surface in the direction perpendicular to the rotation axis C of the roller; a first plane including the contact points P1 and perpendicular to the rotation axis C of the roller (this plane is indicated by the right-hand line defining the distance L in Fig. 27); a second plane parallel to the first plane and in contact with the inner peripheral portion 462a of the pocket 462 formed on the annular portion 464 at the other end (the second plane is indicated by the left-hand line defining the distance L in Fig. 27); and a third plane parallel to the first and second planes and in contact with the second flange 461 (the third plane is indicated by the left-hand line defining the distance 1 in Fig. 27). The second flange 461 is bent such that the distance 1, i.e. the distance between the first and third planes is shorter than the distance L, which is the distance between the first and second planes. With this arrangement, the distal end of the second flange 461 is located nearer to the other end surface of the roller 421 than is the inner peripheral portion 462a of the pocket 462 formed on the annular portion 462 at the other end.

Ordinarily, by setting the distance L in the above manner, the roller 421 in the pocket 462 would not come out of the pocket from its other end by its own weight because the other end surface of the roller is caught by the inner peripheral portion 462a of the pocket 462. But if e.g. the inner race assembly falls, and impact loads are applied to the assembly, the other end surface the roller 421 may disengage from the inner peripheral portion 462a of the pocket 462 due to elastic deformation of the punched retainer. But as in Reference Example 3, when the distal end of the second flange 461 is located nearer to the other end surface 421a of the roller 421 than is the inner peripheral portion 462a of the pocket 462, even if the roller disengages from the inner peripheral portion 462a, the second flange 461 can prevent separation of the roller 421.

The second flange 461 can be formed by bending after all the rollers have been received in the respective pockets. Also, the second flange 461 can be formed by bending simultaneously forming the flange at the one end. If the second flange 461 is formed before inserting the rollers, the rollers are pushed into the space having the length 1.

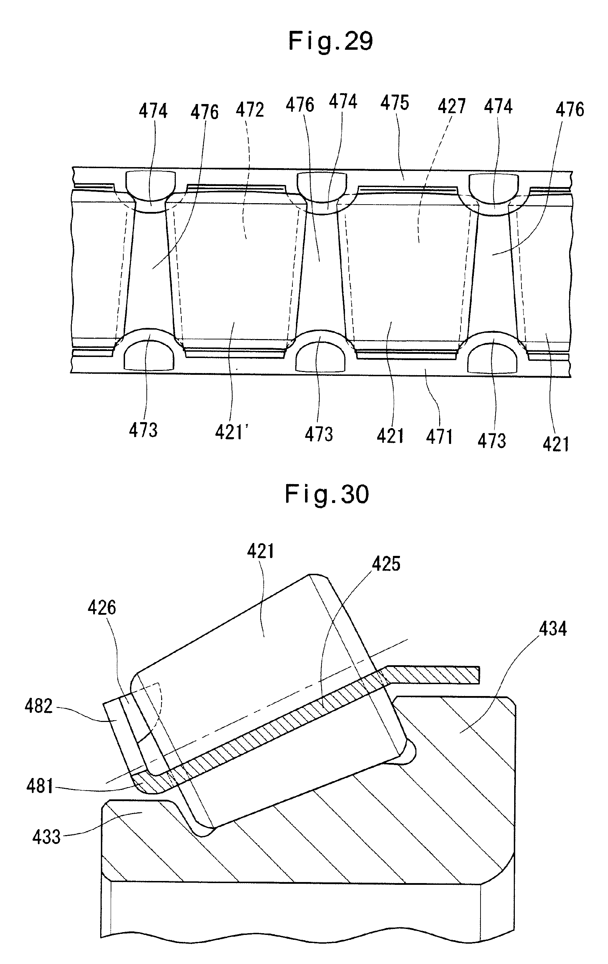

Figs. 28 and 29 show Reference Example 4, which is one example of Reference Mode 4 and a modification of Reference Example 2. As shown, the punched retainer of Reference Example 4 has second anti-separation portions 473 bulged toward the back side by subjecting the portions of the flange 471 between the circumferentially adjacent pockets 472 to extrusion molding. The position of one of the rollers 421' immediately before being received in the pocket is shown by one-dot chain line in Fig. 28, while Fig. 29 shows the rollers 421' received in the respective pockets 472. As shown in these figures, immediately before the rollers are received in the pocket, the outer peripheral portion of each roller 421' engages the two anti-separation portions 474 and the two second anti-separation portions 473. From this state, when the roller 421' is pushed in between the two anti-separation portions 474 and the corresponding second anti-separation portions 473, the two anti-separation portions 474 and the two second anti-separation portions 473 are pushed by the outer peripheral portion of the roller 421'. As a result, the flanges 471 and 475 are elastically deformed as shown schematically by one-dot chain line in Fig. 28. Thus, it is possible to push the roller 421 through the space between the anti-separation portions 474 and the second anti-separation portions 473 into the pocket 472.

In Reference Example 4, since the second anti-separation portions 473, which are identical to the anti-separation portions 474, are formed instead of simply forming the second flange as in Reference Example 3, even if the roller disengages from the inner periphery of the pocket, it is possible to reliably prevent separation of the roller 421.

The punched retainer of Reference Example 4 is guided by the rollers 421 in the radial direction by the sliding contact between the bridges 476 and the rolling surfaces of the rollers 421. With the roller guided type, the rollers 421 are more likely to ride onto the respective bridges 476 during abnormal operation. By providing the additional anti-separation portions 473 as in Reference Example 4, since the outer peripheral portion of each roller 421 is supported by the two anti-separation portions 474 and the two second anti-separation portions 473, even if rollers ride onto the bridges, the rollers 421 can be always circumferentially equidistantly spaced from each other. The retainer of Reference Example 4 may be of the bearing race guided type.

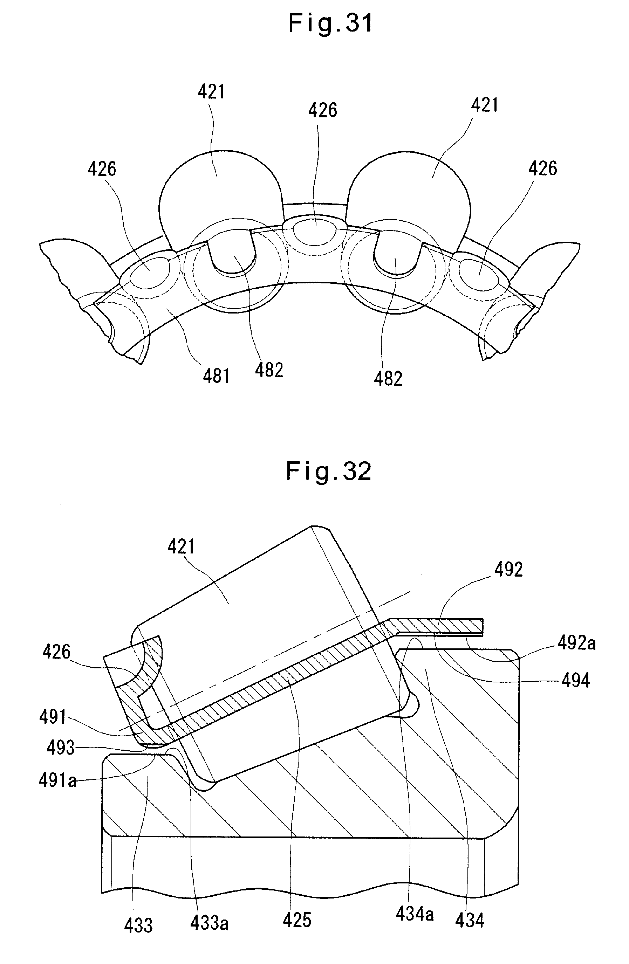

Figs. 30 and 31 show Reference Example 5, which is one example of Reference Mode 5. As shown, the punched retainer of Reference Example 5 has oil windows 482 formed in the flange 481 between the circumferentially adjacent anti-separation portions 426 so as to open to front and back sides. During operation, lubricant flows through spaces between the circumferentially adjacent anti-separation portions 426 and the oil windows 482, so that lubricant can be more effectively directly supplied to the one end surface of each roller 421, and also lubricant can be more effectively supplied to the anti-separation portions 426.

The oil windows 482 are not limited to cutouts as shown but may be of any other form or may be formed at different locations. For example, the oil windows may be through holes or grooves extending the entire width of the inner periphery. In addition to the oil windows formed on the outer periphery, extra oil windows may be formed on the inner periphery too.

When the rollers 421 are guided by the flange 434, it is not necessary to form the roller guide surfaces on the flange 481, which makes it possible to increase the area of the oil windows 482. Thus, the oil windows 482 are more preferably formed in a punched retainer for a roller bearing which is guided by the flange. If the second flange is formed at the other end as in Reference Example 3 or 4, the oil windows 482 may be formed on either one or both of the flanges at the one and the other ends. Especially if a flange or a second flange is formed on the large-diameter annular portion of a tapered roller bearing, the oil windows are preferably formed in the large-diameter annular portion to effectively lubricate the large-diameter end surfaces (which correspond to the end surfaces at the other end in the illustrated example) of the rollers, which receive axial loads.

The oil windows 481 may be formed when forming the retainer by punching, or may be formed by punching the flange 481 after forming the anti-separation portions 426.

Fig. 32 shows Reference Example 6, which is one example of Reference Mode 6. As shown, with the punched retainer of Reference Example 6, the annular portion 491 at the one end and the annular portion 492 at the other end have on the inner periphery thereof at least one oil groove 493 and at least one oil groove 494, respectively, which extend the entire width of the respective annular portions. By forming these oil grooves 493 and 494, during operation, lubricant flows from both sides of the punched retainer into the respective oil grooves 493 and 494 and then is supplied to the slide contact portions between the guided portions 491a and 492a and the retainer guide surfaces 433a and 434a. This prevents disappearance of oil film on the slide contact portions. In order to prevent disappearance of oil film uniformly over the entire circumference, such oil grooves 493 and 494 are preferably formed in as large a number as possible so as to be circumferentially equidistantly spaced from each other.

The oil grooves 493 and 494 may be formed on a disk-shaped material by pressing before forming the flange by bending or may be formed simultaneously when forming the annular member by drawing a disk-shaped material.

In any of the punched retainer of the above embodiments and reference modes, at least one of the surface treatments for improving lubricity, fatigue strength, wear resistance and corrosion resistance may be performed on at least one of its area in contact with each roller and its area in contact with one of the bearing races. Such surface treatment may be performed on the entire surface of the retainer too.

The areas in contact with each roller include the surfaces of the anti-separation portions and the second anti-separation portions, and the inner periphery of the pocket (particularly the circumferential ends of the bridges that can be brought into contact with the outer peripheral portion of the roller). The areas in contact with the bearing races include the guided portions if the retainer is of the bearing race guided type. By performing surface treatment on at least one of these areas to improve properties at such an area that are considered to be inferior at this area than at other areas of the retainer, it is possible to extend the lifespan of the punched retainer.

Surface treatments for improving lubricity include forming minute dimples or grooves, such as tumbler treatment and high-lubrication (HL) treatment. As disclosed in JP Patent Publications 2009-024711A, 2008-121755A, 2006-105323A and 2003-206708A, HL treatment is a treatment in which the Sk value is reduced to -1.6 or less so that oil film forms more easily, thereby increasing the lifespan of a pivot bearing. The Sk value indicates the degree of distortion (skewness) of a roughness curve (ISO4287: 1997), thus indicating the statistic quantity that substantially represents asymmetricity of the valley-peak distribution. In the case of a symmetric distribution such as the Gaussian distribution, the Sk value is close to zero. If peaks are deleted, the Sk value is less than zero, and if valleys are deleted, the Sk value will be higher than zero. The Sk value is controllable by adjusting the rotary speed of the barrel grinder, machining time, feed rate of the workpiece, and/or the type and size of the insert.

Surface treatments for improving the fatigue strength and wear resistance include treatments for generating compressive stress on the surface or increasing the surface hardness, such as shot peening treatment, Tufftride treatment and diamond-like carbon (DLC) treatment.

Surface treatments for improving corrosion resistance include phosphate film treatment and zinc plating.

If it is difficult to perform surface treatment on a specific area only, surface treatment may be performed on the entire surface of the punched retainer. In particular, surface treatment for improving lubricity is preferably performed on the areas brought into contact with the rollers and the guided portions.

### DESCRIPTION OF THE NUMERALS

- 1.: Large-diameter annular portion
- 1a,: 31a, 301a. Roller guide surface
- 3, 32, 202, 302.: Bridge
- 4, 33, 203, 303.: Pocket
- 5.: Convex roller
- 6, 31, 204, 314.: Flange
- 6a, 6b, 204a.: Flat surface portion
- 6c, 31b, 205, 315.: Anti-separation portion
- 6d, 317.: Recess
- 10.: Punched retainer
- 11, 12, 211, 212, 311, 312.: Bearing race
- 12a, 312a.: Oil hole
- 201, 301.: Roller
- 207a, 316.: Roller support surface
- 318a.: Main contact area (Flat surface portion)
- 318b.: Auxiliary contact area (Flat surface portion)
- g.: Gap
- r.: Flange bent portion

## Claims

1. A punched retainer comprising a large-diameter annular portion, a small-diameter annular portion, and a plurality of bridges extending between the large-diameter annular portion and the small-diameter annular portion and defining a plurality of circumferentially separated pockets between the adjacent bridges, said retainer having roller guide surfaces which can be brought into sliding contact with end surfaces of revolving convex rollers, and a flange formed by bending the large-diameter annular portion in a radial direction, **characterized in that** said roller guide surfaces comprise punched sections formed on the portions of the inner peripheries of the pockets located at the large-diameter annular portion, and the flange has a bent portion that extends the entire circumference of the large-diameter annular portion.

2. The punched retainer of claim 1 wherein the end surfaces of the convex rollers are entirely ground surfaces except chamfered portions, and the roller guide surfaces have such a circumferential length that the roller guide surfaces are brought into sliding contact with the ground surfaces over the entire diameter thereof while the rollers are revolving.

3. The punched retainer of claim 1 or 2 wherein said flange has a back formed with a flat surface portion which extends the entire circumference thereof and can be brought into sliding contact with the back of the flange of another identically shaped punched retainer.

4. The punched retainer of claim 3 wherein the bridges are configured to contact the convex rollers from one of radially inward and radially outward directions, thereby preventing separation of the rollers, wherein the flange is bent in the other of the radially inward and radially outward directions, and wherein said flange has anti-separation portions located between the circumferentially adjacent pockets, respectively, and configured to overlap an outer peripheral portions of the respective convex rollers from the other of the radially inward and radially outward directions with a gap left therebetween.

5. The punched retainer of claim 4 wherein the anti-separation portions comprise bulges bulged toward the front side by extrusion molding of the portions of the flange between the circumferentially adjacent pockets, whereby when each convex roller is pushed into the corresponding pocket while elastically deforming the flange, the two anti-separation portions on both circumferential sides of the convex roller elastically recover and overlap the outer peripheral portion of the convex roller from the other of the radially inward and radially outward directions with a gap left therebetween.

6. The punched retainer of claim 5 wherein said flange has a distal edge that extends along a circle.

7. The punched retainer of claim 5 or 6 wherein each anti-separation portion is symmetrical so as to be effective to two circumferentially adjacent rollers.

8. The punched retainer of any of claims 5 to 7 wherein roller support surfaces for reducing skew behavior of the rollers are formed on the front side of the flange, and wherein said flat surface portion comprises a main contact area displaced from recesses formed when the anti-separation portions are formed by extrusion molding in the one of the radially inward and radially outward directions and extending the entire circumference of the flange, and auxiliary contact areas formed between the circumferentially adjacent recesses.

9. The punched retainer of claim 8 wherein the roller support surfaces are formed between the circumferentially adjacent anti-separation portions by extrusion molding.

10. The punched retainer of claim 9 wherein each roller support surface intersects the rotation axis of the corresponding roller and is circumferentially symmetrical.

11. The punched retainer of any of claims 5 to 10 wherein each anti-separation portion axially bulges most remarkably at the distal edge of the flange, and the degree of axial bulge decreases gradually in the one of the radially inward and radially outward directions.

12. The punched retainer of claim 11 wherein each anti-separation portion is circumferentially widest at the distal edge of the flange, and its circumferential width decreases gradually in the one of the radially inward and radially outward directions.

13. The punched retainer of any of claims 5 to 12 wherein said recesses are continuous with said flat surface portion.

14. The punched retainer of claim 13 wherein said recesses extend to the distal edge of the flange.

15. A self aligning roller bearing wherein an opposed pair of the punched retainers of any of claims 3 to 14 are mounted between inner and outer races.

16. The self-aligning roller bearing of claim 15 that includes no guide ring between the inner and outer races.

17. The punched retainer of claim 16 wherein the back of the flange of each retainer has recesses formed when the anti-separation portions are formed by bulging so as to be continuous with the flat surface portion, and wherein the bearing race in the other of the radially inward and radially outward directions is formed with oil holes through which a lubricant is supplied to the recesses.

18. A method of manufacturing a punched retainer comprising the steps of forming an annular member including a peripheral wall having a large-diameter end and a small-diameter end from a metal sheet, bending the large-diameter end of the peripheral wall in a radial direction, thereby forming a flange, and forming holes as pockets between the large-diameter and small-diameter ends of the peripheral wall by punching, **characterized in that** the flange is formed before forming the holes by punching, and that the holes are formed by punching at locations spaced from a bent portion formed when forming the flange by bending toward the small-diameter portion such that punched sections of each pocket at an annular portion of the retainer at its large-diameter end faces one end surface of a convex roller retained in the pocket.
